# EUROPEAN PATENT SPECIFICATION

(11) **EP 4 564 787 B1**
(45) Date of publication and mention of the grant of the patent: **07.10.2026**
(21) Application number: 23862225.2
(22) Date of filing: 29.08.2023
(51) Int. Cl.: H04W 72/543, H04L 67/61, H04W 28/02, H04W 76/12, H04W 76/11

(54) **COMMUNICATION METHOD AND COMMUNICATION APPARATUS**
KOMMUNIKATIONSVERFAHREN UND KOMMUNIKATIONSVORRICHTUNG
PROCÉDÉ DE COMMUNICATION ET APPAREIL DE COMMUNICATION

(30) Priority: 07.09.2022 CN 202211091953
(43) Date of publication of application: 04.06.2025
(60) Divisional application: 26193753.6
(73) Proprietor: Honor Device Co., Ltd., Shenzhen, Guangdong 518040 (CN)
(72) Inventor: ZHANG, Mingzhu, Shenzhen, Guangdong 518040 (CN)
(74) Representative: Gill Jennings & Every LLP
(86) International application number: PCT/CN2023/115493
(87) International publication number: WO 2024/051530

(56) References cited:
- CN-A- 108 307 516
- US-A1- 2022 070 738
- ZTE CORPORATION ET AL: "RAN level protocol enhancements for XR awareness", vol. RAN WG2, no. Electronic meeting; 20220801, 10 August 2022 (2022-08-10), XP052261295, Retrieved from the Internet <URL:https://ftp.3gpp.org/tsg_ran/WG2_RL2/TSGR2_119-e/Docs/R2-2207980.zip R2-2207980_XrProtocolEnh_v3.docx> [retrieved on 20220810]
- CMCC: "Consideration on XR-awareness in RAN", vol. RAN WG2, no. Electronic; 20220817 - 20220826, 10 August 2022 (2022-08-10), XP052261750, Retrieved from the Internet <URL:https://ftp.3gpp.org/tsg_ran/WG2_RL2/TSGR2_119-e/Docs/R2-2208443.zip R2-2208443 Consideration on XR-awareness in RAN.doc> [retrieved on 20220810]
- 3GPP: "3rd Generation Partnership Project; Technical Specification Group Services and System Aspects; Study on XR (Extended Reality) and media services (Release 18", 2 May 2022 (2022-05-02), pages 1 - 218, XP093098529, Retrieved from the Internet <URL:https://www.3gpp.org/specifications-technologies/releases/release-18> [retrieved on 20231106]
- NTT DOCOMO, INC.: "Discussion on XR-awareness", 3GPP TSG-RAN WG2 MEETING #119 ELECTRONIC, R2-2207197, 10 August 2022 (2022-08-10), XP052260520
- "3rd Generation Partnership Project; Technical Specification Group Services and System Aspects; Study on XR (Extended Reality) and media services (Release 18)", 3GPP TR 23.700-60, no. V0.4.0, 5 September 2022 (2022-09-05), pages 1 - 261, XP052211585
- INTERDIGITAL INC.: "Discussion on XR-Awareness", 3GPP RAN WG2 MEETING #119-E, R2-2207489, 10 August 2022 (2022-08-10), XP052260809
- CMCC: "Consideration on XR-awareness in RAN", 3GPP TSG-RAN WG2 MEETING #119 ELECTRONIC, R2-2208443, 10 August 2022 (2022-08-10), XP052261750
- LENOVO: "Differentiated QoS handling for XR and media service", 3GPP TSG SA WG2 MEETING #150E, S2-2202656, 29 March 2022 (2022-03-29), XP052133491
- ETRI: "RAN behaviour for XR-awareness QoS", 3GPP TSG-RAN WG2 #119-E, R2-2208223, 10 August 2022 (2022-08-10), XP052261534

## Description

### TECHNICAL FIELD

This application relates to the communication field, and specifically, to a communication method and a communication apparatus.

### BACKGROUND

Extended reality (extended reality, XR) refers to an environment that is generated by using computer technologies and wearable devices and that combines reality and virtuality and enables human-computer interaction. XR is proposed based on concepts such as augmented reality (augmented reality, AR), virtual reality (virtual reality, VR), mixed reality (mixed reality, MR), and cloud gaming (cloud game, CG). XR is a collective name, and includes AR, VR, MR, and CG. An XR service aims to achieve interactive and immersive experience effects by using a high-speed network and technologies such as 360-degree videos. The XR service is characterized by a non-integral period, a time-of-arrival jitter, and a variable data packet size. The XR service includes a multi-flow service. The multi-flow service may include a plurality of types of data, and different types of data have different importance on transmitted content.

Currently, application-layer service data is transmitted in a same QoS flow. In a current QoS framework, one QoS flow can be mapped to only one DRB. One DRB corresponds to one logical channel LCH. Therefore, scheduling methods for data transmitted on the LCH are consistent. That is, according to a current protocol, scheduling needs to be performed for the multi-flow service by using a same scheduling rule. Because the XR service includes a plurality of types of data, the current rule for mapping one QoS flow to only one DRB is no longer applicable to the XR multi-flow service.

ZTE CORPORATION ET AL: "RAN level protocol enhancements for XR awareness", 3GPP DRAFT; R2-2207980, 3RD GENERATION PARTNERSHIP PROJECT (3GPP), 10 August 2022 discloses a discussion of how XR awareness impacts the overall RAN protocol architecture.

CMCC: "Consideration on XR-awareness in RAN", 3GPP DRAFT; R2-2208443, 3RD GENERATION PARTNERSHIP PROJECT (3GPP), 10 August 2022 discloses an investigation of the potential RAN impacts of the XR-awareness, considering the SA2 and RAN1 work on the XR enhancement to progress the study of XR enhancement for NR.

3gpp: "3rd Generation Partnership Project; Technical Specification Group Services and System Aspects; Study on XR (Extended Reality) and media services (Release 18)", 2 May 2022, pages 1-218 discloses an extension to the QoS Flow based QoS framework such that the QoS Flow is still the finest QoS control in the SGS, but a QoS Flow will compose multiple sub QoS Flows.

### SUMMARY

In view of this, this application provides a communication method, a communication apparatus, a computer-readable storage medium, and a computer program product, to implement rules for mapping different data flows to a DRB and therefore better meet a transmission requirement of an XR multi-flow service.

According to a first aspect, a communication method is provided. For example, the method may be performed by a terminal device, or may be performed by a component (for example, a circuit, a chip, or a chip system) configured in the terminal device. This is not limited in this application.

Specifically, the communication method is in accordance with appended claim 1.

In some possible implementations, the first configuration parameter information includes one or more of the following information: a priority identifier of a PDU set, importance of a PDU set, a dependency identifier of a PDU set, an identifier of a PDU in a PDU set, an index parameter, a sub QoS flow parameter, a data packet size of a PDU set, and a delay of a PDU set, where the index parameter represents a PDU index in a QoS flow.

The first configuration parameter information is used for determining the first rule. The first rule is the rule for mapping the first data flow to the DRB.

For example, the first configuration parameter information is used for mapping the to-be-transmitted data to the DRB according to the rule for mapping the first data flow to the DRB. The term "rule for mapping the first data flow to the DRB" corresponds to a term "rule for mapping a QoS flow to a DRB" in a standard protocol.

According to the foregoing technical solution, the first configuration parameter information is received to map the to-be-transmitted data to the DRB according to the "rule for mapping the first data flow to the DRB", where the first data flow is the protocol data unit PDU set, the PDU, the sub quality of service QoS flow, the data flow at the finer granularity than the QoS flow, the data flow included in the QoS flow, or the data flow mapped to the sub QoS flow. Compared with a current solution in which to-be-transmitted data can be mapped to a DRB only according to a rule for mapping a QoS flow to the DRB, this embodiment of this application provides rules for mapping different data flows to the DRB, so that data of different types (for example, different priorities, different importance, different dependency, different data packet sizes, different transmission delay requirements, or different transmission requirements) in multi-flow service (for example, XR service) data may be mapped according to different mapping rules, in other words, data of a same type is mapped by using a same mapping rule, to better meet a transmission requirement of an XR service.

This embodiment of this application further provides a related embodiment on how to configure the first configuration parameter information.

In some possible implementations, the first configuration parameter information is represented by one or more fields. The method further includes:
determining one or more of the following: a value range of the one or more fields, a data structure of the one or more fields, a quantity of values of the one or more fields, and a need code (need codes) of the one or more fields.

Optionally, that the first configuration parameter information is represented by one or more fields may be understood as: The first configuration parameter information includes one or more fields. In an implementation, the one or more fields may correspond to a specific piece of parameter information included in the first configuration parameter information. In other words, the one or more fields are a specific piece of parameter information.

In some possible implementations, a type of the one or more fields is a one-shot operation field (for example, a Need N field), where the one-shot operation field indicates that the terminal device does not store the first configuration parameter information after receiving the first configuration parameter information.

For example, after the data to be transmitted this time is mapped to the DRB by using the first configuration parameter information, if a DRB configuration is received again, and the DRB configuration does not include first configuration parameter information, the terminal device does not use the first configuration parameter information stored last time. In this way, the first configuration parameter information can be flexibly configured, to respond to a service requirement.

It should be understood that the first configuration parameter in the foregoing example is in a DRB configuration, but this embodiment of this application is not limited thereto. If the first configuration parameter is in another configuration, for example, an SDAP configuration, or another RRC message, refer to the foregoing example of the DRB configuration, and the DRB configuration is replaced with the another configuration, to obtain an implementation for the another configuration.

In some possible implementations, a type of the one or more fields is a first-type storage field (for example, a Need M field), where the first-type storage field indicates that the terminal device stores the first configuration parameter information in the terminal device after receiving the first configuration parameter information. Therefore, for the first-type storage field, if content (the first configuration parameter information) of the storage field is not released, data may be mapped to the DRB by still using the first configuration parameter information. In this way, before the content (the first configuration parameter information) of the storage field is released, the terminal device may always map the data to the DRB by using the first configuration parameter information, to avoid repeated configuration.

It should be understood that the first configuration parameter in the foregoing example is in a DRB configuration, but this embodiment of this application is not limited thereto. If the first configuration parameter is in another configuration, for example, an SDAP configuration, or another RRC message, refer to the foregoing example of the DRB configuration, and the DRB configuration is replaced with the another configuration, to obtain an implementation for the another configuration.

In some possible implementations, a type of the data structure corresponding to the one or more fields is a sequence structure or an integer structure.

In some possible implementations, the first configuration parameter information is represented by a plurality of fields, the plurality of fields include a first field, and the first field represents a QoS flow identifier QFI or a QFI list.

A message or signaling carrying the first configuration parameter information is not specifically limited in this embodiment of this application. The first configuration parameter information may be carried in existing signaling, or may be carried in newly defined signaling.

In some possible implementations, the receiving first configuration parameter information includes:
receiving radio resource control RRC signaling from an access network device, where the RRC signaling includes the first configuration parameter information.

In some possible implementations, the first configuration parameter information is included in a service data adaptation protocol SDAP configuration in the RRC signaling, or the first configuration parameter information is included in a DRB configuration in the RRC signaling.

In some possible implementations, the first configuration parameter information is carried in a newly defined message or newly defined signaling. For example, a first protocol layer is above an SDAP layer, and a configuration message for configuring the first protocol layer includes the first configuration parameter information.

The following implementation is described by using an example in which the first configuration parameter information includes some information. This embodiment of this application is not limited thereto.

In some possible implementations, the list of PDU set identifiers includes an identifier of a first PDU set and an identifier of a second PDU set.

The mapping to-be-transmitted data to the DRB according to the first rule includes:
mapping a first PDU set and a second PDU set of each QoS flow in a QoS flow list to the DRB according to the identifier of the first PDU set and the identifier of the second PDU set, where the QoS flow list includes one or more QoS flow identifiers.

A PDU set of the to-be-transmitted data is the first PDU set or the second PDU set.

Therefore, the terminal device maps the to-be-transmitted data to the DRB according to the rule for mapping the first data flow to the DRB, to implement rules for mapping different data flows to the DRB.

The first configuration parameter information includes a list of PDU set identifiers and a priority list of PDUs in a PDU set, the list of PDU set identifiers includes an identifier of a third PDU set and an identifier of a fourth PDU set, and the priority list of the PDUs in the PDU set includes a first priority index and a second priority index, where the first priority index identifies a PDU with a first priority in the PDU set, and the second priority index identifies a PDU with a second priority in the PDU set.

The mapping to-be-transmitted data to the DRB according to the first rule includes:
mapping a PDU with the first priority in the third PDU set and a PDU with the first priority in the fourth PDU set in one or more QoS flows to a first DRB according to the identifier of the third PDU set, the identifier of the fourth PDU set, and the priority list of the PDUs in the PDU set; and
mapping a PDU with the second priority in the third PDU set and a PDU with the second priority in the fourth PDU set in the one or more QoS flows to a second DRB according to the identifier of the third PDU set, the identifier of the fourth PDU set, and the priority list of the PDUs in the PDU set.

A priority index of the first data flow of the to-be-transmitted data is the first priority index or the second priority index.

Therefore, the terminal device maps the to-be-transmitted data to the DRB according to the rule for mapping the first data flow to the DRB, to implement rules for mapping different data flows to the DRB.

In some possible implementations, the first configuration parameter information includes a list of PDU set identifiers, a priority list of PDUs in a fifth PDU set, and a priority list of PDUs in a sixth PDU set, where the list of PDU set identifiers includes an identifier of the fifth PDU set and an identifier of the sixth PDU set, the priority list of the PDUs in the fifth PDU set includes a PDU with a first priority index and a PDU with a second priority index, and the priority list of the PDUs in the sixth PDU set includes a PDU with the first priority index and a PDU with the second priority index.

The mapping to-be-transmitted data to the DRB according to the first rule includes:
mapping the PDU with the first priority index in the fifth PDU set and the PDU with the first priority index in the sixth PDU set to a first DRB according to the identifier of the fifth PDU set, the identifier of the sixth PDU set, and the priority list of the PDUs in the fifth PDU set; and
mapping the PDU with the second priority index in the fifth PDU set and the PDU with the second priority index in the sixth PDU set to a second DRB according to the identifier of the fifth PDU set, the identifier of the sixth PDU set, and the priority list of the PDUs in the second PDU set.

A priority index of a PDU set of the to-be-transmitted data is the first priority index or the second priority index.

Therefore, the terminal device maps the to-be-transmitted data to the DRB according to the rule for mapping the first data flow to the DRB, to implement rules for mapping different data flows to the DRB.

In some possible implementations, a QoS flow identifier of the one or more QoS flows is included in the QoS flow list, and the QoS flow list is carried in SDAP configuration information.

In some possible implementations, the first configuration parameter information includes a first sub QoS flow parameter, a second sub QoS flow parameter, a first QFI, and a second QFI, the first QFI identifies a first QoS flow, the second QFI identifies a second QoS flow, the first sub QoS flow parameter identifies a first sub QoS flow in a QoS flow, the second sub QoS flow parameter identifies a second sub QoS flow in a QoS flow, the first QoS flow includes one or more sub QoS flows, and the second QoS flow includes one or more sub QoS flows.

The mapping to-be-transmitted data to the DRB according to the first rule includes:
mapping a first sub QoS flow and a second sub QoS flow in the first QoS flow and a first sub QoS flow and a second sub QoS flow in the second QoS flow to a first DRB according to the first sub QoS flow parameter, the second sub QoS flow parameter, the first QFI, and the second QFI.

A sub QoS flow of the to-be-transmitted data is the first sub QoS flow or the second sub QoS flow.

Therefore, the terminal device maps the to-be-transmitted data to the DRB according to the rule for mapping the first data flow to the DRB, to implement rules for mapping different data flows to the DRB.

In some possible implementations, the first configuration parameter information includes a first sub QoS flow parameter, a second sub QoS flow parameter, a third QFI, and a fourth QFI, the third QFI identifies a third QoS flow, the fourth QFI identifies a fourth QoS flow, the first sub QoS flow parameter identifies a first sub QoS flow in the third QoS flow, and the second sub QoS flow parameter identifies a second sub QoS flow in the fourth QoS flow.

The mapping to-be-transmitted data to the data radio bearer DRB according to the first rule includes:
mapping the first sub QoS flow in the third QoS flow and the second sub QoS flow in the fourth QoS flow to a first DRB according to the first sub QoS flow parameter, the second sub QoS flow parameter, the third QFI, and the fourth QFI.

Therefore, the terminal device maps the to-be-transmitted data to the DRB according to the rule for mapping the first data flow to the DRB, to implement rules for mapping different data flows to the DRB.

In some possible implementations, the first configuration parameter information includes a first index parameter, a second index parameter, and a fifth QFI, where the first index parameter identifies a first PDU, the second index parameter identifies a second PDU, the fifth QFI identifies a fifth QoS flow, and the first PDU and the second PDU are PDUs in the fifth QoS flow.

Mapping data of one or more QoS flows to the data radio bearer DRB according to the first rule includes:
mapping the first PDU and the second PDU in the fifth QoS flow to a first DRB according to the first index parameter, the second index parameter, and the fifth QFI.

Therefore, the terminal device maps the to-be-transmitted data to the DRB according to the rule for mapping the index parameter to the DRB, to implement rules for mapping different data flows to the DRB.

In some possible implementations, the first configuration parameter information further includes a correspondence between the index parameter and a PDU in a PDU set.

It should be understood that the foregoing implementations may be implemented in combination. When the implementations are implemented in combination, a corresponding mapping rule may be obtained based on a plurality of pieces of parameter information included in the first configuration parameter information.

In some possible implementations, before the mapping to-be-transmitted data to the data radio bearer DRB, the method further includes:
determining configuration parameter information corresponding to the to-be-transmitted data as the first configuration parameter information.

In some possible implementations, when a first protocol layer sub-header exists in the RRC signaling (for example, the DRB configuration), the first configuration parameter information is carried in the first protocol layer sub-header.

For example, the first protocol layer may be the SDAP layer. The first protocol layer sub-header is an SDAP header (header). An SDAP-layer sub-header includes the first configuration parameter information.

For example, the RRC signaling is the DRB configuration.

In some possible implementations, when a first protocol layer sub-header does not exist in the RRC signaling, a data unit of the first protocol layer includes the to-be-transmitted data.

According to an unclaimed second aspect, a communication method is provided. For example, the method may be performed by an access network device, or may be performed by a component (for example, a circuit, a chip, or a chip system) configured in the access network device. This is not limited in this application.

Specifically, the communication method includes: determining first configuration parameter information, where the first configuration parameter information includes one or more of the following information: a protocol data unit PDU set identifier, a priority identifier of a PDU set, a dependency identifier of a PDU set, an identifier of a PDU in a PDU set, a priority identifier of a PDU in a PDU set, an index parameter, a sub quality of service QoS flow parameter, a data packet size of a PDU set, and a delay of a PDU set, where the index parameter represents a PDU index in a QoS flow; and sending the first configuration parameter information to a terminal device.

For example, the first configuration parameter information is used by the terminal device to determine a first rule, the first rule is a rule for mapping a first data flow to a data radio bearer DRB, and the first data flow is a protocol data unit PDU set, a PDU, a sub quality of service QoS flow, a data flow at a finer granularity than a QoS flow, a data flow included in a QoS flow, a data flow mapped to a QoS flow, a data flow mapped to a sub QoS flow, or a data flow mapped to a PDU set.

According to the foregoing technical solution, the first configuration parameter information is sent to the terminal device, so that the terminal device determines the "rule for mapping the first data flow to the DRB", and maps to-be-transmitted data to the DRB according to the "rule for mapping the first data flow to the DRB", where the first data flow is the protocol data unit PDU set, the PDU, the sub quality of service QoS flow, the data flow at the finer granularity than the QoS flow, the data flow included in the QoS flow, the data flow mapped to the QoS flow, or the data flow mapped to the sub QoS flow. Compared with a current solution in which to-be-transmitted data can be mapped to a DRB only according to a rule for mapping a QoS flow to the DRB, this example of this application provides a solution at a finer granularity, so that data of different types (for example, different priorities, different importance, different dependency, different data packet sizes, different transmission delay requirements, or different transmission requirements) in multi-flow service (for example, XR service) data may be mapped according to different mapping rules, in other words, data of a same type is mapped by using a same mapping rule, to better meet a transmission requirement of an XR service.

In some possible implementations, the method further includes:
releasing the first configuration parameter information, where the releasing the first configuration parameter information is implemented by not configuring the first configuration parameter information.

Therefore, the first configuration parameter information is released by "not configuring the first configuration parameter information". This helps reduce overheads.

In some possible implementations, the determining first configuration parameter information includes:
determining the first configuration parameter information according to a policy and charging control PCC rule delivered by a core network device.

In some possible implementations, the sending the first configuration parameter information to a terminal device includes:
sending radio resource control RRC signaling to the terminal device, where the RRC signaling includes the first configuration parameter information.

In some possible implementations, the sending the first configuration parameter information to a terminal device includes:
sending radio resource control DCI or MAC CE signaling to the terminal device, where the DCI signaling or the MAC CE includes the first configuration parameter information.

In some possible implementations, the first configuration parameter information is included in a service data adaptation protocol SDAP configuration in the RRC signaling, or the first configuration parameter information is included in a data radio bearer DRB configuration in the RRC signaling.

This example of this application further provides a related example on how to configure the first configuration parameter information. For related descriptions (such as technical effects or need codes (need codes)) of configuring the first configuration parameter information, refer to the descriptions in the first aspect, and details are not described herein again.

In some possible implementations, the first configuration parameter information is represented by one or more fields. The method further includes:
determining one or more of the following: a value range of the one or more fields, a data structure of the one or more fields, a quantity of values of the one or more fields, and a need code of the one or more fields.

In some possible implementations, a type of the one or more fields is a one-shot operation field, where the one-shot operation field indicates that the terminal device does not store the first configuration parameter information after receiving the first configuration parameter information.

In some possible implementations, a type of the one or more fields is a storage field, where the storage field indicates that the terminal device stores the first configuration parameter information in the terminal device after receiving the first configuration parameter information.

In some possible implementations, a type of the data structure corresponding to the one or more fields is a sequence structure or an integer structure.

In some possible implementations, the first configuration parameter information is represented by a plurality of fields, the plurality of fields include a first field, and the first field represents a QoS flow identifier QFI or a QFI list.

In some possible implementations, when a first protocol layer sub-header exists in the RRC signaling, the first configuration parameter information is carried in the first protocol layer sub-header.

In some possible implementations, when a first protocol layer sub-header does not exist in the RRC signaling, a data unit of a first protocol layer includes the to-be-transmitted data.

According to a third unclaimed aspect, a communication apparatus is provided, including each module or unit configured to perform the method in any possible implementation of the first aspect or each module or unit configured to perform the method in any possible implementation of the second aspect.

In a design, the communication apparatus may include one-to-one corresponding modules for performing the methods/operations/steps/actions described in the foregoing aspects. The module may be implemented by a hardware circuit, may be implemented by software, or may be implemented by a combination of a hardware circuit and software.

In a design, the communication apparatus is a communication chip. The communication chip may include an input circuit or interface configured to send information or data and an output circuit or interface configured to receive information or data.

In another design, the communication apparatus is a communication device. The communication device may include a transmitter configured to send information or data and a receiver configured to receive information or data.

In another design, the communication apparatus is configured to perform the method in any possible implementation of the first aspect. The communication apparatus may be configured in the terminal device above, or the communication apparatus is a terminal device. Alternatively, the communication apparatus is configured to perform the method in any possible implementation of the second aspect. The communication apparatus may be configured in the access network device above, or the communication apparatus is an access network device.

According to a fourth aspect, a communication apparatus is provided,in accordance with appended claim 15. The processor is coupled to a memory, and may be configured to execute instructions or data in the memory, to implement the method in any possible implementation of the first aspect or the second aspect. Optionally, the communication apparatus further includes the memory. Optionally, the communication apparatus further includes a communication interface, and the processor is coupled to the communication interface.

In an implementation, the communication interface may be a transceiver or an input/output interface.

In another implementation, the communication apparatus is a chip configured in a terminal device. When the communication apparatus is the chip configured in the terminal device, the communication interface may be the input/output interface.

Optionally, the transceiver may be a transceiver circuit. Optionally, the input/output interface may be an input/output circuit.

According to a fifth unclaimed aspect, a processor is provided, including an input circuit, an output circuit, and a processing circuit. The processing circuit is configured to receive a signal through the input circuit, and transmit a signal through the output circuit, to enable the processor to perform the method in any possible implementation of the first aspect, or enable the processor to perform the method in any possible implementation of the second aspect.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, for example, a receiver, a signal output by the output circuit may be output to, for example, a transmitter and transmitted by the transmitter, and the input circuit and the output circuit may be a same circuit, where the circuit is separately used as the input circuit and the output circuit at different moments. Specific implementations of the processor and various circuits are not limited in this example of this application.

According to a sixth unclaimed aspect, a communication apparatus is provided, including a processor and a memory. The processor is configured to read instructions stored in the memory, and may receive a signal through a receiver and transmit a signal through a transmitter, to perform the method in any possible implementation of the first aspect or the method in any possible implementation of the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated on a same chip, or may be disposed on different chips. A type of the memory and a manner of disposing the memory and the processor are not limited in this example of this application.

It should be understood that, for a related data interaction process, for example, sending indication information may be a process of outputting indication information from the processor, and receiving capability information may be a process of receiving and inputting capability information by the processor. Specifically, data output by the processor may be output to a transmitter, and input data received by the processor may be from a receiver. The transmitter and the receiver may be collectively referred to as a transceiver.

The processing apparatus in the sixth aspect may be one or more chips. The processor in the processing apparatus may be implemented by hardware or may be implemented by software. When implemented by the hardware, the processor may be a logic circuit, an integrated circuit, or the like. When implemented by the software, the processor may be a general-purpose processor and implemented by reading software code stored in the memory. The memory may be integrated inside the processor, or may be located outside the processor and independently exist.

According to a seventh unclaimed aspect, a computer program product is provided. The computer program product includes a computer program (which may also be referred to as code or instructions). When the computer program is run, a computer is enabled to perform the method in any possible implementation of the first aspect, or is enabled to perform the method in any possible implementation of the second aspect.

According to an eighth unclaimed aspect, a computer-readable storage medium is provided. The computer-readable storage medium stores a computer program (which may also be referred to as code or instructions). When the computer program is run on a computer, the computer is enabled to perform the method in any possible implementation of the first aspect, or is enabled to perform the method in any possible implementation of the second aspect.

According to a ninth unclaimed aspect, an example of this application provides a chip system. The chip system includes one or more processors configured to invoke, from a memory, instructions stored in the memory and run the instructions, to enable the method in any possible implementation of the foregoing aspects to be performed. The chip system may include a chip, or may include a chip and another discrete component.

The chip system may include an input circuit or interface configured to send information or data and an output circuit or interface configured to receive information or data.

According to a tenth unclaimed aspect, a communication system is provided, including one or more of the foregoing terminal device and access network device. Optionally, the communication system may further include another device that communicates with the terminal device and/or the access network device.

### BRIEF DESCRIPTION OF DRAWINGS

FIG. 1 is an exemplary diagram of an application scenario according to an embodiment of this application;
FIG. 2 is a schematic flowchart of a communication method according to an embodiment of this application;
FIG. 3 is an exemplary diagram of mapping to-be-transmitted data to a DRB according to an embodiment of this application;
FIG. 4 is another exemplary diagram of mapping to-be-transmitted data to a DRB according to an embodiment of this application;
FIG. 5 is still another exemplary diagram of mapping to-be-transmitted data to a DRB according to an embodiment of this application;
FIG. 6 is yet another exemplary diagram of mapping to-be-transmitted data to a DRB according to an embodiment of this application;
FIG. 7 is still another exemplary diagram of mapping to-be-transmitted data to a DRB according to an embodiment of this application;
FIG. 8 is still another exemplary diagram of mapping to-be-transmitted data to a DRB according to an embodiment of this application;
FIG. 9 is a schematic block diagram of a communication apparatus according to an embodiment of this application;
FIG. 10 is another schematic block diagram of a communication apparatus according to an embodiment of this application; and
FIG. 11 is a schematic structural diagram of an access network device according to an embodiment of this application.

### DESCRIPTION OF EMBODIMENTS

The following describes technical solutions in embodiments of this application with reference to the accompanying drawings.

In the embodiments of this application, "a plurality of" may be understood as "at least two", and "a plurality of items" may be understood as "at least two items".

The technical solutions in the embodiments of this application may be applied to various communication systems, for example, a long term evolution (long term evolution, LTE) system, a universal mobile telecommunications system (universal mobile telecommunication system, UMTS), a worldwide interoperability for microwave access (worldwide interoperability for microwave access, WiMAX) communication system, a 5th generation (5th generation, 5G) system or a new radio (new radio, NR) system, a future mobile communication system, vehicle-to-X (vehicle-to-X, V2X), where V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), and the like, long term evolution-vehicle (long term evolution-vehicle, LTE-V), Internet of vehicles, machine type communication (machine type communication, MTC), Internet of things (Internet of things, IoT), long term evolution-machine (long term evolution-machine, LTE-M), and machine-to-machine (machine-to-machine, M2M).

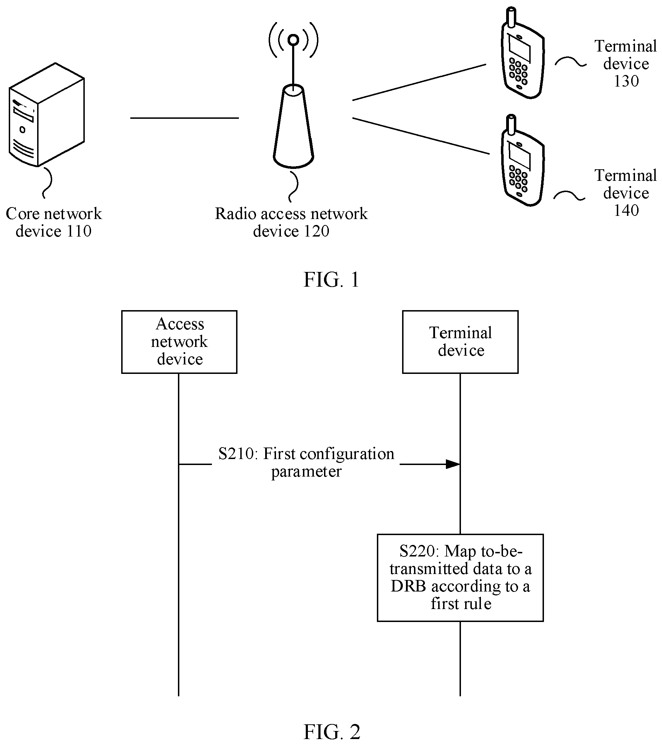

FIG. 1 is a schematic architectural diagram of a mobile communication system to which an embodiment of this application is applied. As shown in FIG. 1, the mobile communication system includes a core network device 110, a radio access network device 120, and at least one terminal device (for example, a terminal device 130 and a terminal device 140 in FIG. 1). The terminal device is connected to the radio access network device in a wireless manner, and the radio access network device is connected to the core network device in a wireless or wired manner. The core network device and the radio access network device may be independent and different physical devices, functions of the core network device and a logical function of the radio access network device may be integrated into a same physical device, or some functions of the core network device and some functions of the radio access network device may be integrated into one physical device. The terminal device may be in a fixed position or may be movable.

It should be understood that FIG. 1 is merely a schematic architectural diagram of the communication system. The communication system may further include other network devices, for example, a wireless relay device and a wireless backhaul device, that are not shown in FIG. 1. Quantities of core network devices, radio access network devices, and terminal devices that are included in the mobile communication system are not limited in this embodiment of this application.

The terminal device may also be referred to as user equipment (user equipment, UE), a mobile station (mobile station, MS), a mobile terminal (mobile terminal, MT), an access terminal, a subscriber unit, a subscriber station, a mobile station, a mobile station, a remote station, a remote terminal, a mobile device, a user terminal, a terminal, a wireless communication device, a user agent, a user apparatus, or the like.

The terminal device may be a device that provides voice and/or data connectivity for a user, for example, a handheld device or a vehicle-mounted device having a wireless connection function. At present, some examples of the terminal are as follows: a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal loaded with cloud gaming, a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, or a terminal device in a future evolved public land mobile network (public land mobile network, PLMN). This is not limited in the embodiments of this application.

By way of example and not limitation, in the embodiments of this application, the terminal device may alternatively be a wearable device. The wearable device may also be referred to as a wearable smart device, and is a collective term for wearable devices that are developed by intelligently designing for daily wear by using a wearable technology, for example, glasses, gloves, a watch, clothing, and shoes. The wearable device is a portable device that is directly worn on the body or integrated into clothes or an accessory of a user. The wearable device is not merely a hardware device, but implements powerful functions through software support, data exchange, and cloud interaction. Generalized wearable intelligent devices include full-function and large-size devices that can implement all or some functions without depending on smartphones, for example, smart watches or smart glasses, and include devices that focus on a specific type of application function and need to be used together with other devices such as smartphones, for example, various smart bands or smart jewelry for monitoring physical signs.

In addition, in the embodiments of this application, the terminal device may alternatively be a terminal device in an Internet of things (Internet of things, IoT) system. IoT is an important part in future development of information technologies, and is mainly technically characterized in connecting things to networks by using communication technologies, to achieve intelligent networks of human-machine interconnection and interconnection between things. The embodiments of this application impose no limitation on a specific technology and a specific device form used by the terminal device.

The radio access network (radio access network, RAN) device is an access device that is accessed by the terminal device in a wireless manner and that is in the mobile communication system, and may be a NodeB NodeB, an evolved NodeB (evolved NodeB, eNB), a next generation NodeB (next generation NodeB, gNB) in a 5G mobile communication system, a transmission point, a base station in a future mobile communication system, an access node in a Wi-Fi system, or one or more antenna panels of a base station in a 5G system, or may be a network node, for example, a baseband unit (baseband unit, BBU) or a distributed unit (distributed unit, DU), included in a gNB or a transmission point. The embodiments of this application impose no limitation on a specific technology and a specific device form used by the radio access network device. In some deployments, the gNB may include a central unit (central unit, CU) and a DU, and each of the CU and the DU implements some functions of the gNB. For example, the CU is responsible for processing a non-real-time protocol and service, and implementing functions at radio resource control (radio resource control, RRC) and packet data convergence protocol (packet data convergence protocol, PDCP) layers. The DU is responsible for processing a physical layer protocol and real-time service, and implementing functions at radio link control (radio link control, RLC), media access control (media access control, MAC), and physical (physical, PHY) layers. The gNB may further include an active antenna unit (active antenna unit, AAU). The AAU implements some physical layer processing functions, radio frequency processing, and a function related to an active antenna. Because information at the RRC layer eventually becomes information at the PHY layer, or is converted from information at the PHY layer, in this architecture, higher layer signaling, for example, RRC layer signaling, may also be considered as being sent by the DU, or sent by the DU and the AAU. It may be understood that the network device may be a device including one or more of a CU node, a DU node, and an AAU node. In addition, the CU may be used as a network device in an access network, or may be used as a network device in a core network (core network, CN). This is not limited in this application.

The radio access network device and the terminal device may be deployed on land, including an indoor or an outdoor device, or a handheld or vehicle-mounted device; may be deployed on water; or may be deployed on an airplane, a balloon, and a satellite in air. Application scenarios of the radio access network device and the terminal device are not limited in the embodiments of this application.

Communication may be performed between the radio access network device and the terminal device and between terminal devices through a licensed spectrum (licensed spectrum), an unlicensed spectrum (unlicensed spectrum), or both a licensed spectrum and an unlicensed spectrum. Communication may be performed between the radio access network device and the terminal device and between terminal devices through a spectrum below 6 gigahertz (gigahertz, GHz), a spectrum above 6G, or both a spectrum below 6G and a spectrum above 6G. A spectrum resource used between the radio access network device and the terminal device is not limited in the embodiments of this application.

In the embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems for implementing service processing through a process (process), for example, a Linux operating system, a Unix operating system, an Android operating system, an iOS operating system, or a Windows operating system. The application layer includes applications such as a browser, an address book, text processing software, and instant messaging software. In addition, a specific structure of an execution body of a method provided in the embodiments of this application is not particularly limited in the embodiments of this application, provided that communication can be performed according to the method provided in the embodiments of this application by running a program that records code for the method provided in the embodiments of this application. For example, the execution body of the method provided in the embodiments of this application may be a terminal device or a network device, or a functional module that is in a terminal device or a network device and that can invoke a program and execute the program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media configured to store information. The term "machine-readable media" may include but is not limited to a radio channel and various other media that can store, contain, and/or carry instructions and/or data.

For ease of understanding of the embodiments of this application, the following first briefly describes terms in the embodiments of this application. It should be understood that, alternatively, for explanations of some terms, refer to explanations in a 3rd generation partnership project (3rd generation partnership project, 3GPP) standard protocol.
1. Protocol data unit (protocol data unit, PDU) session (PDU session): A 5G core (5G corenet, 5GC) supports a PDU connection service. The PDU connection service may be a service for exchanging a PDU data packet between a terminal device and a data network DN. The PDU connection service is implemented by initiating establishment of a PDU session by the terminal device. After one PDU session is established, one data transmission channel between the terminal device and the DN is established. In other words, the PDU session is at a UE level. Each terminal device may establish one or more PDU sessions.

In a core network, an SMF is mainly configured to be responsible for session management in a mobile network. The PDU session may be established, modified, or released between the terminal device and the session management network element (session management function, SMF) by using non-access stratum (non-access stratum, NAS) session management (session management, SM) signaling.

In the embodiments of this application, one PDU session may be identified by one PDU session identifier (PDU session identifier, PDU session ID).

2. Protocol data unit (protocol data unit, PDU) set (set): One PDU set includes one or more PDUs, and these PDUs carry (carry) a payload (payload) of one unit of information (one unit of information), for example, a frame or a video slice for an XRM service, generated at an application layer (application level). One PDU set may be identified by a PDU set identifier (ID). For example, the PDU set identifier may be a PDU sequence mark (PDU sequence Mark, PSM) or a PDU set sequence number (sequency number, SN). A PDU in each PDU set may be identified by a PDU priority mark (PDU priority Mark, PSM) or a PDU SN.

It may be understood that the foregoing explanations about the PDU set do not constitute a limitation on the embodiments of this application. For a person skilled in the art, alternatively, for a concept of the PDU set, refer to descriptions in a standard document. Details are as follows:
PDU Set: APDU Set is composed of one or more PDUs carrying the payload of one unit of information generated at the application level (e.g. a frame or video slice for XRM Services, as used in TR 26.926 [27]). In some implementations all PDUs in a PDU Set are needed by the application layer to use the corresponding unit of information. In other implementations, the application layer can still recover parts all or of the information unit, when some PDUs are missing.

3. QoS flow (QoS Flow): Currently, the QoS flow is a finest QoS differentiation granularity in a PDU session. In a 5G system, one QoS flow identifier (QoS Flow ID, QFI) may identify one QoS flow. One PDU session may include a plurality of QoS flows, but the QoS flows have different QFIs. In other words, a QFI is unique in one PDU session.

4. Sub QoS flow (sub QoS Flow): One QoS flow may include a plurality of sub QoS flows. Optionally, each sub QoS flow may include one or more PDU sets, and each PDU set includes one or more PDUs. Alternatively, optionally, each sub QoS flow may include one or more PDUs. In the embodiments of this application, a sub QoS flow in a QoS flow may be identified by a sub QoS flow parameter. The sub QoS flow parameter may be a sub QoS flow identifier (sub QoS Flow ID, SQFI) or an XQFI, where the XQFI is determined based on a QFI and the SQFI.

5. A QoS flow transmission process may involve the following protocol layers: a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical (physical, PHY) layer.

6. A core network device (for example, a policy control function (policy control function, PCF) network element) may generate a policy and charging control (policy and charging control, PCC) rule according to service information.

An XR service includes a multi-flow service, and the multi-flow service not only includes data (for example, an I frame) with a high priority, but also includes data (for example, a P frame) with a low priority. Therefore, a mapping rule for mapping a QoS flow to a DRB is no longer applicable to the XR service.

In view of this, the embodiments of this application provide a communication method and a communication apparatus, to map to-be-transmitted data to a DRB according to a rule for mapping a first data flow to a DRB, where the first data flow is a protocol data unit PDU set, a PDU, a sub quality of service QoS flow, a data flow at a finer granularity than a QoS flow, a data flow included in a QoS flow, a data flow mapped to a sub QoS flow, a data flow mapped to a QoS flow, or a data flow mapped to a sub QoS flow, to meet diversified requirements of the XR service.

The communication method in the embodiments of this application is described below with reference to FIG. 2 to FIG 8.

FIG. 2 is a schematic interaction diagram of a communication method 200 according to an embodiment of this application. It may be understood that a terminal device in FIG. 2 may be the terminal device (for example, the terminal device 130 or the terminal device 140) in FIG. 1, or may be an apparatus (for example, a processor, a chip, or a chip system) in the terminal device. An access network device may be the access network device 120 in FIG. 1, or may be an apparatus (for example, a processor, a chip, or a chip system) in the access network device. It may be further understood that some or all of information exchanged between the terminal device and the access network device in FIG. 2 may be carried in an existing message, channel, or signal or existing signaling, or may be carried in a newly defined message, channel, or signal or newly defined signaling. This is not specifically limited. As shown in FIG. 2, the method 200 includes the following steps:
S210: The access network device sends first configuration parameter information to the terminal device. Correspondingly, the terminal device receives the first configuration parameter information. The first configuration parameter information is used for determining a first rule. The first rule is a rule for mapping a first data flow to a data radio bearer DRB. The first data flow is a protocol data unit PDU set, a PDU, a sub quality of service QoS flow, a data flow at a finer granularity than a QoS flow, a data flow included in a QoS flow, a data flow mapped to a QoS flow, a data flow mapped to a sub QoS flow, or a data flow mapped to a PDU set.

For example, the first configuration parameter information includes one or more of the following information: a protocol data unit PDU set identifier, a priority identifier of a PDU set, a dependency identifier of a PDU set, an identifier of a PDU in a PDU set, a priority identifier of a PDU in a PDU set, an index parameter, a sub QoS flow parameter, a data packet size of a PDU set, a delay of a PDU set, a data packet size of a PDU in a PDU set, and a delay of a PDU in a PDU set. Optionally, the first configuration parameter information further includes a quality of service QoS flow identifier.

For example, the first configuration parameter information is used for mapping to-be-transmitted data to the DRB according to the rule for mapping the first data flow to the DRB. The term "rule for mapping the first data flow to the DRB" corresponds to a term "rule for mapping a QoS flow to a DRB" in a standard protocol. A granularity of the first data flow is finer than that of the QoS flow.

The terminal device maps the to-be-transmitted data to the DRB according to the first rule. In other words, the terminal device maps the to-be-transmitted data to the DRB according to the "rule for mapping the first data flow to the DRB".

A representation form of a data packet of the "to-be-transmitted data" is not specifically limited in this embodiment of this application. For example, the data packet of the to-be-transmitted data may be a service data unit (service data unit, SDU) (or referred to as a service data unit). For another example, the to-be-transmitted data packet may be a protocol data unit (protocol data unit, PDU).

Optionally, in an implementation, the "granularity of the first data flow" is a granularity of the PDU set. Correspondingly, the mapping the to-be-transmitted data to the data radio bearer DRB according to the first rule includes: mapping the to-be-transmitted data (namely, the data packet, for example, the PDU or the SDU, of the to-be-transmitted data) to the DRB according to the rule for mapping the first data flow to the DRB. Correspondingly, the first configuration parameter information includes configuration parameter information related to the PDU set, to map the first data flow to the DRB.

Optionally, in another implementation, the "granularity of the first data flow" is a granularity of the sub QoS flow. Correspondingly, the mapping the to-be-transmitted data to the radio bearer DRB according to the first rule includes: mapping the to-be-transmitted data (namely, the data packet, for example, the PDU or the SDU, of the to-be-transmitted data) to the radio bearer DRB according to a rule for mapping the sub QoS flow to the DRB. Correspondingly, the first configuration parameter information includes configuration parameter information related to the sub QoS flow, to map the sub QoS flow to the DRB.

The following specifically describes a definition of each piece of parameter information that may be included in the first configuration parameter information and a first rule (in other words, a method for mapping to the DRB) corresponding to each piece of parameter information. That is, the following describes possible implementations of the "rule for mapping the first data flow to the DRB" with reference to each piece of parameter information that may be included in the first configuration parameter information.

It should be understood that, in the embodiments of this application, the first configuration parameter information may be included in a DRB configuration to be sent to the terminal device, may be included in an SDAP configuration to be sent to the terminal device, or may be carried in another message or other signaling to be sent to the terminal device. This is described herein in a unified manner, and is not specifically limited.

It should be further understood that, in the embodiments of this application, when the rule for mapping the first data flow to the DRB is applicable to a specific QoS flow, the QoS flow may be included in the SDAP configuration (for example, the foregoing QoS flow 1 may be a QoS flow in the SDAP configuration), or may be a QoS flow corresponding to the QFI included in the first configuration parameter information. This is described herein in a unified manner. For example, the first configuration parameter information further includes a QFI 1 (identifying the QoS flow 1).

It should be further understood that, in the embodiments of this application, when the rule for mapping the first data flow to the DRB is applicable to a plurality of QoS flows, the plurality of QoS flows may be included in the SDAP configuration (for example, the foregoing QoS flow 1, a QoS flow 2, and a QoS flow 3 may be QoS flows in the SDAP configuration), or may be QoS flows corresponding to QFIs included in the first configuration parameter information. This is described herein in a unified manner. For example, the first configuration parameter information further includes a QFI 1 (identifying the QoS flow 1), a QFI 2 (identifying the QoS flow 2), and a QFI 3 (identifying the QoS flow 3).
1. The PDU set identifier identifies a PDU set.

Generally, one QoS flow may include a plurality of PDU sets, and each PDU set may be identified by a PDU set identifier. Alternatively, the PDU set and a QoS flow may be decoupled, and the PDU set is a granularity independent of the QoS flow.

When the first configuration parameter information includes the PDU set identifier, a QoS flow to which a rule that is for mapping the first data flow to the DRB and that is configured according to the PDU set identifier is applicable is not specifically limited in this embodiment of this application. When the first configuration parameter information includes the PDU set identifier, the rule that is for mapping the first data flow to the DRB and that is configured according to the PDU set identifier may be applied to one or more QoS flows.

Optionally, in an implementation, the rule that is for mapping the first data flow to the DRB and that is configured according to the PDU set identifier is applicable to only one specific QoS flow.

For example, it is assumed that the terminal device receives the DRB configuration (including a DRB ID 1), and further receives the first configuration parameter information corresponding to the DRB configuration, where the first configuration parameter information includes a PDU set 1 and a PDU set 2, and the first configuration parameter information is applicable to only the QoS flow 1. After receiving the to-be-transmitted data, the terminal device determines that a QoS flow of the to-be-transmitted data is the QoS flow 1, and a PDU set of the to-be-transmitted data is the PDU set 1 or the PDU set 2. In this case, the terminal device maps the to-be-transmitted data to a DRB 1 identified by the DRB ID 1.

However, the rule that is for mapping the first data flow to the DRB and that is configured according to the foregoing first configuration parameter information (the first configuration parameter information includes the PDU set 1 and the PDU set 2, and the first configuration parameter information is applicable to only the QoS flow 1) is not applicable to another QoS flow.

For example, for the QoS flow 2 and the QoS flow 3, the terminal device may map all PDU sets in the QoS flow 2 and all PDU sets in the QoS flow 3 to the DRB 1 by using a default mapping rule (for example, using the QoS flow as a granularity by default for mapping). The default mapping rule may be defined in a protocol or configured last time. This is not specifically limited.

It should be understood that the examples of the QoS flow 2 and the QoS flow 3 herein are merely exemplary descriptions intended to clarify that a rule for mapping a first data flow in the QoS flow 2 and the QoS flow 3 to the DRB is not applicable to the foregoing rule that is for mapping the first data flow to the DRB and that is configured according to the PDU set identifier, instead of limiting mapping of the PDU sets in the QoS flow 2 and the QoS flow 3 to the DRB to this example, and this embodiment of this application is not limited thereto. In fact, another appropriate mapping rule is also applicable.

Optionally, in an implementation, the rule that is for mapping the first data flow to the DRB and that is configured according to the PDU set identifier is applicable to a plurality of QoS flows.

For example, it is assumed that the terminal device receives the DRB configuration (including a DRB ID 1), and further receives the first configuration parameter information corresponding to the DRB configuration, where the first configuration parameter information includes a PDU set 1 and a PDU set 2, and the first configuration parameter information is applicable to the QoS flow 1, the QoS flow 2, and the QoS flow 3. After receiving the to-be-transmitted data, the terminal device determines that a QoS flow of the to-be-transmitted data is the QoS flow 1, the QoS flow 2, or the QoS flow 3, and a PDU set of the to-be-transmitted data is the PDU set 1 or the PDU set 2. In this case, the terminal device maps the to-be-transmitted data to a DRB 1 identified by the DRB ID 1.

Optionally, the QoS flow 1, the QoS flow 2, and the QoS flow 3 may be all QoS flows included in the SDAP configuration, or may be QoS flows corresponding to QFIs included in the first configuration parameter information. For example, the first configuration parameter information further includes the QFI 1 (identifying the QoS flow 1), the QFI 2 (identifying the QoS flow 2), and the QFI 3 (identifying the QoS flow 3).

It should be understood that the foregoing examples of the PDU set identifier are merely exemplary descriptions, and this embodiment of this application is not limited thereto.

In this embodiment of this application, for a plurality of PDU sets, each PDU set may include one or more PDUs. This is described herein in a unified manner. It should be understood that quantities of PDUs included in different PDU sets may be the same or different. This is not limited in this embodiment of this application.

2. The priority identifier of the PDU set identifies a priority of the PDU set. Generally, for a plurality of PDU sets included in a QoS flow, different PDU sets may have different priorities or a same priority. For example, factors for classifying the different PDU sets include but are not limited to the following: priorities of the PDU sets, importance of the PDU sets, dependency of the PDU sets, data packet size thresholds of the PDU sets, delay thresholds of the PDU sets, and the like.

A specific meaning of the importance of the PDU set is not limited in this embodiment of this application. In an implementation, the importance of the PDU set represents a degree of importance of data. For example, if a PDU set 1 includes an I frame, a PDU set 2 includes a P frame, and the I frame is more important than the P frame, importance of the PDU set 1 is higher than that of the PDU set 2.

In another implementation, the importance of the PDU set may alternatively be described as a priority or a priority related feature. For example, a more important PDU set indicates a PDU set with a higher priority.

In still another implementation, the importance of the PDU set may be determined according to privacy or security of data. For example, if the PDU set includes secure data, a degree of importance of the PDU set is higher than that of other non-secure data.

Optionally, classifying the PDU sets according to the data packet size includes: classifying the PDU sets according to one or more data packet size thresholds. It may be understood that the data packet size threshold may be determined based on an actual requirement. A manner of determining the delay threshold is not limited in this embodiment of this application.

It may be further understood that, for related descriptions of classifying the PDU sets according to the data packet size, refer to descriptions below (3. Data packet size threshold of the PDU set). For brevity, details are not described herein.

Optionally, classifying the PDU sets according to a transmission delay threshold includes: classifying the PDU sets according to one or more delay thresholds. It may be understood that the delay threshold may be determined based on an actual delay requirement. A manner of determining the delay threshold is not limited in this embodiment of this application.

It may be further understood that, for related descriptions of classifying the PDU sets according to the transmission delay threshold, refer to descriptions below (4. Delay threshold of the PDU set). For brevity, details are not described herein.

Optionally, a level of the priority of the PDU set may be represented by a priority index value. Different priority index values correspond to different priorities. For example, a larger priority index value indicates a higher priority of a PDU set identified by the priority index value. For another example, a smaller priority index value indicates a higher priority of a PDU set identified by the priority index value.

For example, a QoS flow includes a PDU set 1, a PDU set 2, and a PDU set 3, the PDU set 1 and the PDU set 2 correspond to a priority index 1, and the PDU set 3 corresponds to a priority index 2. Assuming that a larger index value indicates a higher corresponding priority, a priority of the PDU set identified by the priority index 2 is higher than a priority of the PDU set identified by the priority index 1, in other words, a priority of the PDU set 3 is higher than priorities of the PDU set 1 and the PDU set 2.

It should be understood that the priority index value is a representation form of the priority identifier of the PDU set. This embodiment of this application is not limited thereto. In fact, the level of the priority may alternatively be represented in another form.

It should be further understood that the priority of the PDU set is merely used as an example herein for description, and this embodiment of this application is not limited thereto. In fact, the priority of the PDU set may alternatively be replaced with other content, such as the importance of the PDU set, the dependency of the PDU set, the data packet size of the PDU set, or the transmission delay requirement of the PDU set.

When the first configuration parameter information includes the priority identifier of the PDU set, a QoS flow range to which a rule that is for mapping the first data flow to the DRB and that is configured according to the priority identifier of the PDU set is applicable is not specifically limited in this embodiment of this application. When the first configuration parameter information includes the priority identifier of the PDU set, the rule that is for mapping the first data flow to the DRB and that is configured according to the priority identifier of the PDU set may be applied to one or more QoS flows.

Optionally, in an implementation, the rule that is for mapping the first data flow to the DRB and that is configured according to the priority identifier of the PDU set is applicable to only one specific QoS flow.

For example, it is assumed that the terminal device receives the DRB configuration (including a DRB ID 1), and further receives the first configuration parameter information corresponding to the DRB configuration, where the first configuration parameter information includes the priority identifier of the PDU set (for example, a priority index 1 of the PDU set), and the first configuration parameter information is applicable to only the QoS flow 1. After receiving the to-be-transmitted data, the terminal device determines that a QoS flow of the to-be-transmitted data is the QoS flow 1, and a PDU set of the to-be-transmitted data corresponds to the priority index 1. In this case, the terminal device maps the to-be-transmitted data to a DRB 1 identified by the DRB ID 1.

It may be understood that when the first configuration parameter information includes the priority identifier of the PDU set, the first configuration parameter information may further include the PDU set identifier. For example, the first configuration parameter information includes a PDU set 1 and a PDU set 2, and the PDU set 1 and the PDU set 2 correspond to the priority index 1. In this case, when the rule for mapping the first data flow to the DRB is configured according to the first configuration parameter, refer to both the foregoing examples of the PDU set identifier and the priority identifier of the PDU set. For brevity, details are not described herein again.

The rule that is for mapping the first data flow to the DRB (that is, mapping the priority index 1 of the PDU set to the DRB 1) and that is configured according to the priority identifier of the PDU set is not applicable to another QoS flow. For example, assuming that a QoS flow of the to-be-transmitted data is the QoS flow 2, the terminal device maps a PDU set in the QoS flow 2 to another DRB. It should be understood that the example of the QoS flow 2 herein is merely exemplary descriptions intended to clarify that a rule for mapping the PDU set in the QoS flow 2 is not applicable to the foregoing rule that is for mapping the first data flow to the DRB and that is configured according to the priority identifier of the PDU set, instead of limiting mapping of the PDU set in the QoS flow 2 to this example, and this embodiment of this application is not limited thereto. In fact, another appropriate mapping rule is also applicable.

Optionally, in an implementation, the rule that is for mapping the first data flow to the DRB and that is configured according to the priority identifier of the PDU set may be applied to a plurality of QoS flows.

For example, it is assumed that the terminal device receives the DRB configuration (including a DRB ID 1), and further receives the first configuration parameter information corresponding to the DRB configuration, where the first configuration parameter information includes the priority identifier of the PDU set (for example, a priority index 1 of the PDU set), and the first configuration parameter information is applicable to the QoS flow 1, the QoS flow 2, and the QoS flow 3. After receiving the to-be-transmitted data, the terminal device determines that a QoS flow of the to-be-transmitted data is the QoS flow 1, the QoS flow 2, or the QoS flow 3, and a priority index of a PDU set of the to-be-transmitted data is 1. In this case, the terminal device maps the to-be-transmitted data to a DRB 1 identified by the DRB ID 1.

The foregoing describes a case in which one set of DRB configurations is received, and the following describes a case in which a plurality of sets of DRB configurations (for example, a DRB configuration 1 and a DRB configuration 2) are received.

For example, when the rule that is for mapping the first data flow to the DRB and that is configured according to the priority identifier of the PDU set is applicable to only one specific QoS flow, if the terminal device receives two sets of DRB configurations, a specific mapping manner is as follows:
The terminal device receives the DRB configuration 1 (including the DRB ID 1) and configuration parameter information (including the priority index 1 of the PDU set) corresponding to the DRB configuration 1, and the configuration parameter information corresponding to the DRB configuration 1 is applicable to only the QoS flow 1.

The terminal device receives the DRB configuration 2 (including a DRB ID 2) and configuration parameter information (including a priority index 2 of a PDU set) corresponding to the DRB configuration 2, and the configuration parameter information corresponding to the DRB configuration 2 is applicable to only the QoS flow 1.

After the terminal device receives the to-be-transmitted data, if it is determined that a QoS flow of the to-be-transmitted data is the QoS flow 1, and a priority index of a PDU set of the to-be-transmitted data is 1, the terminal device maps the to-be-transmitted data to a DRB 1; or if it is determined that a QoS flow of the to-be-transmitted data is the QoS flow 1, and a priority index of a PDU set of the to-be-transmitted data is 2, the terminal device maps the to-be-transmitted data to a DRB 2.

The rule that is for mapping the first data flow to the DRB and that is configured according to the priority identifier of the PDU set is not applicable to another QoS flow. For example, assuming that the to-be-transmitted data is a PDU set 1, a PDU set 2, or a PDU set 3 in the QoS flow 2, the terminal device maps the to-be-transmitted data to another DRB.

It should be understood that the example of the QoS flow 2 herein is merely exemplary descriptions intended to clarify that the QoS flow 2 is not applicable to the foregoing rule that is for mapping the first data flow to the DRB and that is configured according to the priority identifier of the PDU set, instead of limiting mapping of the PDU set in the QoS flow 2 to this example, and this embodiment of this application is not limited thereto. In fact, another appropriate mapping rule is also applicable.

For another example, when the rule that is for mapping the first data flow to the DRB and that is configured according to the priority identifier of the PDU set may be applied to a plurality of QoS flows, if the terminal device receives two sets of DRB configurations, a specific mapping manner is as follows:
For example, the terminal device receives the DRB configuration 1 (including the DRB ID 1) and configuration parameter information (including the priority index 1 of the PDU set) corresponding to the DRB configuration 1, and the configuration parameter information corresponding to the DRB configuration 1 is applicable to the QoS flow 1, the QoS flow 2, and the QoS flow 3.

The terminal device receives the DRB configuration 2 (including a DRB ID 2) and configuration parameter information (including a priority index 2 of a PDU set) corresponding to the DRB configuration 2, and the configuration parameter information corresponding to the DRB configuration 2 is applicable to the QoS flow 1, the QoS flow 2, and the QoS flow 3.

After the terminal device receives the to-be-transmitted data, if it is determined that the to-be-transmitted data is the QoS flow 1, the QoS flow 2, or the QoS flow 3, and a priority index of a PDU set of the to-be-transmitted data is 1, the terminal device maps the to-be-transmitted data to a DRB 1; or if it is determined that a QoS flow of the to-be-transmitted data is the QoS flow 1, the QoS flow 2, or the QoS flow 3, and a priority index of a PDU set of the to-be-transmitted data is 2, the terminal device maps the to-be-transmitted data to a DRB 2.

It should be understood that the foregoing example is described by using an example in which the DRB configuration 1 and the DRB configuration 2 are applicable to a same plurality of QoS flows (such as the QoS flow 1, the QoS flow 2, and the QoS flow 3). However, this embodiment of this application is not limited thereto. Optionally, the DRB configuration 1 is applicable to a plurality of QoS flows, the DRB configuration 2 is applicable to a plurality of QoS flows, and the plurality of QoS flows to which the DRB configuration 1 is applicable are different from the plurality of QoS flows to which the DRB configuration 2 is applicable.

### 3. Data packet size of the PDU set (in other words, data packet size threshold of the PDU set)

The data packet size of the PDU set may be used for classifying different PDU sets.

Optionally, the data packet size of the PDU set includes an upper data packet threshold and/or a lower data packet threshold of the PDU set.

A manner of measuring the data packet size of the PDU set is not specifically limited in this embodiment of this application. For example, the data packet size may be represented by a quantity of bytes.

Optionally, classifying the PDU sets according to the data packet size of the PDU set includes: classifying the PDU sets according to one or more data packet size thresholds.

For example, it is assumed that the terminal device receives the DRB configuration (including a DRB ID 1), and further receives a configured data packet size threshold of the PDU set as 1000 bytes. In this case, when the terminal device receives the to-be-transmitted data, if a PDU set of the to-be-transmitted data packet is greater than 1000 bytes, the terminal device maps the to-be-transmitted data to a DRB 1.

It may be understood that the data packet size threshold may be determined based on an actual requirement. A manner of determining the data packet size threshold is not limited in this embodiment of this application.

It may be further understood that the data packet size of the PDU set or the data packet size threshold of the PDU set is merely used as an example above for description, and this embodiment of this application is not limited thereto. A person skilled in the art may alternatively determine another appropriate solution by using the data packet size of the PDU set or the data packet size threshold of the PDU set. For example, the data packet size of the PDU set or the data packet size threshold of the PDU set may alternatively be replaced with a data packet interval of a PDU set. The data packet interval of the PDU set starts from an upper data packet limit 1 of the PDU set and ends with a lower data packet limit 2 of the PDU set.

### 4. Delay of the PDU set (in other words, delay threshold of the PDU set)

The delay of the PDU set may be used for classifying different PDU sets.

Optionally, the delay of the PDU set includes an upper delay threshold of the PDU set and/or a lower delay threshold of the PDU set.

A manner of measuring the delay of the PDU set is not specifically limited in this embodiment of this application. For example, the delay of the PDU set may be represented by a time unit, for example, millisecond or microsecond.

Optionally, classifying the PDU sets according to a delay threshold requirement of the PDU set includes: classifying the PDU sets according to one or more delay thresholds.

For example, it is assumed that the terminal device receives the DRB configuration (including a DRB ID 1), and further receives a delay threshold A. In this case, when the terminal device receives the to-be-transmitted data, if a delay requirement of a PDU set of the to-be-transmitted data packet is B, and B is less than the delay threshold A, the terminal device maps the to-be-transmitted data to a DRB 1.

It may be understood that the delay threshold may be determined based on an actual requirement. A manner of determining the delay threshold is not limited in this embodiment of this application.

5. The dependency identifier of the PDU set represents a dependency relationship between PDU sets. Optionally, the dependency relationship includes a decoding dependency relationship. For example, a data frame included in a PDU set 1 is an I frame (namely, a key frame), and a data frame included in a PDU set 2 is a P frame. In this case, decoding of the PDU set 2 needs to depend on the PDU set 1, and the dependency identifier of the PDU set indicates that the PDU set 2 needs to depend on the PDU set 1. When the first configuration parameter information includes the dependency identifier of the PDU set, a QoS flow to which the rule that is for mapping the first data flow to the DRB and that is configured according to the dependency identifier of the PDU set is applicable is not specifically limited in this embodiment of this application.

It should be understood that the dependency identifier of the PDU set may alternatively be replaced with another term, for example, a correlation identifier of the PDU set. This embodiment of this application is not limited thereto.

Optionally, when the first configuration parameter information includes the dependency identifier of the PDU set, a rule that is for mapping the first data flow to the DRB and that is configured according to the dependency identifier of the PDU set may be applied to one or more QoS flows.

Optionally, in an implementation, the rule that is for mapping the first data flow to the DRB and that is configured according to the dependency identifier of the PDU set is applicable to only one specific QoS flow.

Using the QoS flow as an example, it is assumed that the terminal device receives the DRB configuration (including a DRB ID 1), and the terminal device further receives the first configuration parameter information corresponding to the DRB configuration, where the first configuration parameter information includes a PDU set 1 and a dependency identifier of the PDU set 1, the dependency identifier identifies that decoding of another PDU set depends on the PDU set 1, and the first configuration parameter information is applicable to only the QoS flow 1.

After the terminal device receives the to-be-transmitted data, if it is determined that a QoS flow of the to-be-transmitted data is the QoS flow 1, and a PDU set of the to-be-transmitted data is the PDU set 1 or a PDU set (the PDU set includes the dependency identifier of the PDU set 1) that depends on the PDU set 1, the terminal device maps the to-be-transmitted data to a DRB 1.

However, the dependency identifier of the PDU set is not applicable to another QoS flow. For example, for the QoS flow 2 (including a PDU set 1, a PDU set 2, and a PDU set 3), the PDU set in the QoS flow 2 does not depend on the PDU set 1.

Optionally, in an implementation, the rule that is for mapping the first data flow to the DRB and that is configured according to the dependency identifier of the PDU set may be applied to a plurality of QoS flows.

Using the QoS flow 1, the QoS flow 2, and the QoS flow 3 as an example, it is assumed that the terminal device receives the DRB configuration (including a DRB ID 1), and the terminal device further receives the first configuration parameter information corresponding to the DRB configuration, where the first configuration parameter information includes a PDU set 1 and a dependency identifier of the PDU set 1, the dependency identifier identifies that decoding of a PDU set depends on the PDU set 1, and the first configuration parameter information is applicable to all configured QoS flows.

After the terminal device receives the to-be-transmitted data, if it is determined that a QoS flow of the to-be-transmitted data is the QoS flow 1, the QoS flow 2, or the QoS flow 3, and a PDU set of the to-be-transmitted data is the PDU set 1 or a PDU set (the PDU set includes the dependency identifier of the PDU set 1) that depends on the PDU set 1, the terminal device maps the to-be-transmitted data to a DRB 1.

6. The identifier of the PDU in the PDU set identifies the PDU included in the PDU set. For example, the identifier of the PDU may be a PPM or a PDU SN.

When the first configuration parameter information includes the identifier of the PDU in the PDU set, a QoS flow or a PDU set to which a rule that is for mapping the first data flow to the DRB and that is configured according to the identifier of the PDU in the PDU set is applicable is not specifically limited in this embodiment of this application.

When the first configuration parameter information includes the identifier of the PDU in the PDU set, the rule that is for mapping the first data flow to the DRB and that is configured according to the identifier of the PDU in the PDU set may be applied to one or more QoS flows.

Optionally, in an implementation, the rule that is for mapping the first data flow to the DRB and that is configured according to the identifier of the PDU in the PDU set is applicable to only one specific QoS flow.

Using the QoS flow as an example, it is assumed that the terminal device receives the DRB configuration (including a DRB ID 1), and further receives the first configuration parameter information corresponding to the DRB configuration, where the first configuration parameter information includes a PPM 1 (identifying a PDU 1), a PPM 2 (identifying a PDU 2), and a PPM 3 (identifying a PDU 3), and the first configuration parameter information is applicable to only a PDU set in the QoS flow 1.

After receiving the to-be-transmitted data, the terminal device determines that a QoS flow of the to-be-transmitted data is the QoS flow 1, and a PDU of the to-be-transmitted data is a PDU 1, a PDU 2, or a PDU 3 in a PDU set. In this case, the terminal device maps the to-be-transmitted data to a DRB 1 identified by the DRB ID 1.

However, the rule that is for mapping the first data flow to the DRB and that is configured according to the identifier of the PDU in the PDU set is not applicable to another QoS flow. For example, one or more PDUs in a PDU set in the QoS flow 2 are mapped to a DRB 2.

Optionally, in an implementation, the rule that is for mapping the first data flow to the DRB and that is configured according to the identifier of the PDU in the PDU set is applicable to only one specific PDU set.

Using the PDU set identifier as an example, it is assumed that the terminal device receives the DRB configuration (including a DRB ID 1), and further receives the first configuration parameter information corresponding to the DRB configuration, where the first configuration parameter information includes a PPM 1 (identifying a PDU 1), a PPM 2 (identifying a PDU 2), and a PPM 3 (identifying a PDU 3), and the first configuration parameter information is applicable to only a PDU set 1.

After receiving the to-be-transmitted data, the terminal device determines that a PDU set of the to-be-transmitted data is the PDU set 1, and a PDU of the to-be-transmitted data is a PDU 1, a PDU 2, or a PDU 3 in the PDU set. In this case, the terminal device maps the to-be-transmitted data to a DRB 1 identified by the DRB ID 1.

However, the rule that is for mapping the first data flow to the DRB and that is configured according to the identifier of the PDU in the PDU set is not applicable to another PDU set. For example, one or more PDUs in a PDU set 4 are mapped to a DRB 2.

Optionally, in an implementation, the rule that is for mapping the first data flow to the DRB and that is configured according to the identifier of the PDU in the PDU set may be applied to PDU sets of a plurality of QoS flows.

Using the QoS flow 1, the QoS flow 2, and the QoS flow 3 as an example, it is assumed that the terminal device receives the DRB configuration (including a DRB ID 1), and further receives the first configuration parameter information corresponding to the DRB configuration, where the first configuration parameter information includes a PPM 1 (identifying a PDU 1), a PPM 2 (identifying a PDU 2), and a PPM 3 (identifying a PDU 3), and the first configuration parameter information may be applied to the QoS flow 1, the QoS flow 2, and the QoS flow 3.

After receiving the to-be-transmitted data, the terminal device determines that a QoS flow of the to-be-transmitted data is the QoS flow 1, the QoS flow 2, or the QoS flow 3, and a PDU of the to-be-transmitted data is a PDU 1, a PDU 2, or a PDU 3 in a PDU set. In this case, the terminal device maps the to-be-transmitted data to a DRB 1 identified by the DRB ID 1.

Optionally, in an implementation, the rule that is for mapping the first data flow to the DRB and that is configured according to the identifier of the PDU in the PDU set may be applied to a plurality of PDU sets.

Using the PDU set identifier as an example, it is assumed that the terminal device receives the DRB configuration (including a DRB ID 1), and further receives the first configuration parameter information corresponding to the DRB configuration, where the first configuration parameter information includes a PPM 1 (identifying a PDU 1), a PPM 2 (identifying a PDU 2), and a PPM 3 (identifying a PDU 3), and the first configuration parameter information may be applied to a PDU set 1, a PDU set 2, and a PDU set 3.

After receiving the to-be-transmitted data, the terminal device determines that a PDU set of the to-be-transmitted data is the PDU set 1, the PDU set 2, or the PDU set 3, and a PDU of the to-be-transmitted data is a PDU 1, a PDU 2, or a PDU 3 in the PDU set. In this case, the terminal device maps the to-be-transmitted data to a DRB 1 identified by the DRB ID 1.

It should be understood that the foregoing examples of the identifier of the PDU in the PDU set are merely exemplary descriptions, and this embodiment of this application is not limited thereto.

It should be further understood that the foregoing examples may be configured in combination. For example, the rule that is for mapping the first data flow to the DRB and that is configured according to the identifier of the PDU in the PDU set may be applied to a plurality of PDU sets of a plurality of QoS flows, the rule that is for mapping the first data flow to the DRB and that is configured according to the identifier of the PDU in the PDU set may be applied to a plurality of PDU sets of one QoS flow, the rule that is for mapping the first data flow to the DRB and that is configured according to the identifier of the PDU in the PDU set may be applied to one PDU set of a plurality of QoS flows, or the rule that is for mapping the first data flow to the DRB and that is configured according to the identifier of the PDU in the PDU set may be applied to one PDU set of one QoS flow.

It should be further understood that for an example of the identifier of the PDU in the PDU set, refer to some examples of the PDU set identifier in the foregoing content 1. For brevity, details are not described herein again.

7. The priority identifier of the PDU in the PDU set identifies a priority of the PDU included in the PDU set.

Optionally, a plurality of PDUs in the PDU set may be different, and the different PDUs may have different priorities or a same priority. For example, factors for classifying the different PDUs include but are not limited to the following: priorities of the PDUs, importance of the PDUs, data packet sizes of the PDUs, transmission delay requirements of the PDUs, and the like.

Optionally, classifying the PDUs according to the data packet size includes: classifying the PDUs in the PDU set according to one or more data packet size thresholds. It may be understood that the data packet size threshold may be determined based on an actual requirement. A manner of determining the data packet size threshold is not limited in this embodiment of this application.

Optionally, classifying the PDU sets according to the transmission delay requirement includes: classifying the PDUs in the PDU set according to one or more delay thresholds. It may be understood that the delay threshold may be determined based on an actual requirement. A manner of determining the delay threshold is not limited in this embodiment of this application.

Optionally, levels of priorities of different types of PDUs may be represented by priority index values (the priority index value is a representation form of the priority identifier). Different priority index values correspond to different priorities. For example, a larger priority index value indicates a higher priority of a PDU identified by the priority index value. For another example, a smaller priority index value indicates a higher priority of a PDU identified by the priority index value.

For example, the PDU set includes a PDU 1, a PDU 2, and a PDU 3, where the PDU 1 and the PDU 2 correspond to a priority index 1, and the PDU 3 corresponds to a priority index 2. Assuming that a larger index value corresponds to a higher priority, a priority of the PDU identified by the priority index 2 is higher than a priority of the PDU corresponding to the priority index 1, in other words, a priority of the PDU 3 is higher than priorities of the PDU 1 and the PDU set.

It should be understood that the priority index is an example of the priority identifier of the PDU. This embodiment of this application is not limited thereto.

It should be further understood that the priority of the PDU is merely used as an example herein for description, and this embodiment of this application is not limited thereto. In fact, the priority of the PDU may alternatively be replaced with other content, such as the importance of the PDU.

It should be further understood that a QoS flow range and/or a PDU set range to which a rule that is for mapping the first data flow to the DRB and that is configured according to the priority identifier of the PDU in the PDU set is applicable is not specifically limited in this embodiment of this application.

Optionally, in an implementation, the rule that is for mapping the first data flow to the DRB and that is configured according to the priority identifier of the PDU in the PDU set is applicable to only one specific QoS flow.

For an example in which the rule that is for mapping the first data flow to the DRB and that is configured according to the priority identifier of the PDU in the PDU set is applicable to only one specific QoS flow, refer to the descriptions of the foregoing example of the rule that is for mapping the first data flow to the DRB and that is configured according to the priority identifier of the PDU set. For brevity, details are not described herein.

Optionally, in an implementation, the rule that is for mapping the first data flow to the DRB and that is configured according to the priority identifier of the PDU in the PDU set is applicable to a plurality of QoS flows.

For an example in which the rule that is for mapping the first data flow to the DRB and that is configured according to the priority identifier of the PDU in the PDU set is applicable to a plurality of QoS flows, refer to the descriptions of the foregoing example of the rule that is for mapping the first data flow to the DRB and that is configured according to the priority identifier of the PDU set. For brevity, details are not described herein.

### 8. Data packet size of the PDU (in other words, data packet size threshold of the PDU set)

The data packet size of the PDU may be used for classifying different PDUs.

Optionally, the data packet size of the PDU includes an upper data packet threshold and/or a lower data packet threshold of the PDU.

A manner of measuring the data packet size of the PDU is not specifically limited in this embodiment of this application. For example, the data packet size may be represented by a quantity of bytes.

Optionally, classifying the PDUs according to the data packet size of the PDU includes: classifying the PDUs according to one or more data packet size thresholds.

For example, it is assumed that the terminal device receives the DRB configuration (including a DRB ID 1), and further receives a configured data packet size threshold of the PDU as 1000 bytes. In this case, when the terminal device receives the to-be-transmitted data, if a PDU of the to-be-transmitted data packet is greater than 1000 bytes, the terminal device maps the to-be-transmitted data to a DRB 1.

It may be understood that the data packet size threshold may be determined based on an actual requirement. A manner of determining the delay threshold is not limited in this embodiment of this application.

It may be further understood that the data packet size of the PDU or the data packet size threshold of the PDU is merely used as an example above for description. This embodiment of this application is not limited thereto. A person skilled in the art may alternatively determine another appropriate solution by using the data packet size of the PDU or the data packet size threshold of the PDU. For example, the data packet size threshold of the PDU may alternatively be replaced with a data packet interval of the PDU. The data packet interval of the PDU starts from an upper data packet limit 1 of the PDU and ends with a lower data packet limit 2 of the PDU.

### 9. Delay of the PDU (in other words, delay threshold of the PDU)

The delay of the PDU may be used for classifying different PDUs.

Optionally, the delay of the PDU includes an upper delay threshold of the PDU and/or a lower delay threshold of the PDU.

A manner of measuring the delay of the PDU is not specifically limited in this embodiment of this application. For example, the delay of the PDU may be represented by a time unit, for example, millisecond or microsecond.

Optionally, classifying the PDUs according to a delay threshold requirement of the PDU includes: classifying the PDUs according to one or more delay thresholds.

For example, it is assumed that the terminal device receives the DRB configuration (including a DRB ID 1), and further receives a delay threshold C. In this case, when the terminal device receives the to-be-transmitted data, if a delay requirement of a PDU of the to-be-transmitted data packet is D, and D is less than the delay threshold C, the terminal device maps the to-be-transmitted data to a DRB 1.

It may be understood that the delay threshold may be determined based on an actual requirement. A manner of determining the delay threshold is not limited in this embodiment of this application.

10. The index parameter represents a PDU index in a QoS flow. It should be understood that the index parameter may alternatively have another name, for example, a number parameter or a first parameter. The index parameter is used for sequentially numbering a plurality of PDUs included in a same QoS flow, and the plurality of PDUs may be from different PDU sets in the QoS flow.

Optionally, when the first configuration parameter information includes the index parameter, a rule that is for mapping the first data flow to the DRB and that is configured according to the index parameter may be applied to a first QoS flow. An identifier (for example, a QFI) of the first QoS flow may be carried in the first configuration parameter information, in other words, the QFI and the index parameter may be configured for the terminal device together.

For example, for the QoS flow 1, the QoS flow 1 includes three PDU sets, where a PDU set 1 includes a PPM 1 (identifying a PDU 1) and a PPM 2 (identifying a PDU 2), a PDU set 2 includes a PPM 1 (identifying a PDU 1), a PPM 2 (identifying a PDU 2), and a PPM 3 (identifying a PDU 3), and a PDU set 3 includes a PPM 1 (identifying a PDU 1), a PPM 2 (identifying a PDU 2), and a PPM 3 (identifying a PDU 3). When the index parameter is introduced to represent the PDU, an index parameter corresponding to each PDU in the QoS flow 1 may be represented as follows: An index parameter of the PDU 1 in the PDU set 1 is index1, and an index parameter of the PDU 2 in the PDU set 1 is index2. An index parameter of the PDU 1 in the PDU set 2 is index3, an index parameter of the PDU 2 in the PDU set 2 is index4, and an index parameter of the PDU 3 in the PDU set 2 is index5. An index parameter of the PDU 1 in the PDU set 3 is index6, an index parameter of the PDU 2 in the PDU set 3 is index7, and an index parameter of the PDU 3 in the PDU set 3 is index8.

It is assumed that the terminal device receives the DRB configuration (including a DRB ID 1), and further receives the first configuration parameter information corresponding to the DRB configuration, where the first configuration parameter information includes an identifier of the QoS flow 1, index1, index2, index3, index4, and index5. After the terminal device receives the to-be-transmitted data, if it is determined that a QoS flow of the to-be-transmitted data is the QoS flow 1, and a PDU set of the to-be-transmitted data is a PDU set identified by index 1, index2, index3, index4, or index5, the terminal device maps the to-be-transmitted data to a DRB 1.

11. The sub QoS (sub QoS) flow parameter identifies a sub QoS flow. Optionally, the sub QoS flow may include one or more PDU sets, and each PDU set includes one or more PDUs. Alternatively, the sub QoS flow may include one or more PDUs.

Generally, one QoS flow may include a plurality of sub QoS flows. PDU sets included in the sub QoS flows may be the same or may be different. Quantities of PDUs included in the PDU sets may be the same or may be different. For example, the QoS flow 1 may include a sub QoS flow 1 (including a PDU set 1 to a PDU set 3), a sub QoS flow 2 (including a PDU set 4 to a PDU set 6), and a sub QoS flow 3 (including a PDU set 7 and a PDU set 8).

Optionally, when the first configuration parameter information includes the sub QoS flow parameter, a rule that is for mapping the first data flow to the DRB and that is configured according to the sub QoS flow parameter may be applied to one or more QoS flows.

Optionally, in an implementation, the rule that is for mapping the first data flow to the DRB and that is configured according to the sub QoS flow parameter is applicable to only one specific QoS flow.

Using the QoS flow as an example, it is assumed that the terminal device receives the DRB configuration (including a DRB ID 1), and further receives the first configuration parameter information corresponding to the DRB configuration, where the first configuration parameter information includes a sub QoS flow parameter 1 (identifying a sub QoS flow 1) and a sub QoS flow parameter 2 (identifying a sub QoS flow 2), and the first configuration parameter information is applicable to only the QoS flow 1.

After receiving the to-be-transmitted data, the terminal device determines that a QoS flow of the to-be-transmitted data is the QoS flow 1, and a sub QoS flow of the to-be-transmitted data is the sub QoS flow 1 or the sub QoS flow 2. In this case, the terminal device maps the to-be-transmitted data to a DRB 1 identified by the DRB ID 1.

However, the rule that is for mapping the first data flow to the DRB and that is configured according to the sub QoS flow parameter is not applicable to another QoS flow. For example, a sub QoS flow 1 and a sub QoS flow 2 in the QoS flow 2 are mapped to a DRB 2.

It should be understood that, the manner of mapping the sub QoS flow in the QoS flow 2 herein is merely an example intended to clarify that the sub QoS flow in the QoS flow 2 is not applicable to the foregoing rule that is for mapping the first data flow to the DRB and that is configured according to the sub QoS flow parameter, instead of limiting the manner of mapping the sub QoS flow in the QoS flow 2 to this example. In fact, there may be another mapping manner.

Optionally, in an implementation, the rule that is for mapping the first data flow to the DRB and that is configured according to the sub QoS flow parameter may be applied to a plurality of QoS flows.

For example, it is assumed that the terminal device receives the DRB configuration (including a DRB ID 1), and further receives the first configuration parameter information corresponding to the DRB configuration, where the first configuration parameter information includes a sub QoS flow parameter 1 (identifying a sub QoS flow 1) and a sub QoS flow parameter 2 (identifying a sub QoS flow 2), and the first configuration parameter information may be applied to the QoS flow 1, the QoS flow 2, and the QoS flow 3.

After receiving the to-be-transmitted data, the terminal device determines that a QoS flow of the to-be-transmitted data is the QoS flow 1, the QoS flow 2, or the QoS flow 3, and a sub QoS flow of the to-be-transmitted data is the sub QoS flow 1 or the sub QoS flow 2. In this case, the terminal device maps the to-be-transmitted data to a DRB 1 identified by the DRB ID 1.

It should be understood that the foregoing examples of the sub QoS flow parameter are merely exemplary descriptions, and this embodiment of this application is not limited thereto.

12. The quality of service QoS flow identifier identifies a QoS flow.

For example, the QoS flow 1 may be identified by a QFI 1.

It should be noted that, the QoS flow identifier may be optional parameter information. When the first configuration parameter information does not include the QoS flow identifier, a QoS flow list or a QoS flow identifier in the SADP configuration may be used by default. When the first configuration parameter information includes one or more QoS flow identifiers (a plurality of QoS flow identifiers may form a QoS flow list) or a QoS flow list, the one or more QoS flow identifiers included in the first configuration parameter information may be used by default.

It may be understood that the foregoing examples of the pieces of parameter information described above are merely exemplary descriptions, and this embodiment of this application is not limited thereto. In fact, a person skilled in the art may achieve more appropriate solutions based on the foregoing examples.

It may be further understood that, the pieces of parameter information described above may be configured in combination. For example, if the first configuration parameter information includes one or more of the foregoing plurality of pieces of parameter information, a corresponding mapping rule may be configured according to the one or more pieces of parameter information.

S220: The terminal device maps the to-be-transmitted data to the DRB according to the first rule.

In other words, the first configuration parameter information is used for determining a mapping rule for mapping the to-be-transmitted data to the DRB.

For example, the to-be-transmitted data may be XR multi-flow service data or other service data of a plurality of types.

In this embodiment of this application, the first configuration parameter information is sent to the terminal device, so that the terminal device maps the to-be-transmitted data to the DRB according to the "rule for mapping the first data flow to the DRB", where the first data flow is the protocol data unit PDU set, the PDU, the sub quality of service QoS flow, the data flow at the finer granularity than the QoS flow, the data flow included in the QoS flow, the data flow mapped to the QoS flow, or the data flow mapped to the sub QoS flow. Compared with a current solution in which to-be-transmitted data can be mapped to a DRB only according to a rule for mapping a QoS flow to the DRB, this embodiment of this application can implement rules for mapping different data flows to the DRB, so that data of different types (for example, different priorities, different importance, different dependency, different data packet sizes, different transmission delay requirements, or different transmission requirements) in the multi-flow service (for example, XR service) data may be mapped according to different mapping rules, in other words, data of a same type is mapped by using a same mapping rule, to better meet a transmission requirement of an XR service.

This embodiment of this application further provides a related embodiment on how to configure the first configuration parameter information.

In some embodiments, the first configuration parameter information may be represented by one or more fields.

For example, that the first configuration parameter information is represented by one or more fields may be understood as: The first configuration parameter information includes one or more fields. In an implementation, the one or more fields may correspond to a specific piece of parameter information in the 12 pieces of configuration parameter information described above.

Optionally, when the first configuration parameter information is represented by the one or more fields, the method further includes: determining one or more of the following: a value range of the one or more fields, a data structure (namely, a data type, a data structure type, or a field type) of the one or more fields, a quantity of values of the one or more fields, and a need code (need codes) of the one or more fields.

The value range of the field is not specifically limited in this embodiment of this application. Optionally, for the QoS flow, a quantity of PDU sets or PDUs carried in one QoS flow is limited, and a maximum quantity of PDU sets or PDUs that can be carried in one QoS flow may depend on the value range of the field.

For example, if one QoS flow can maximally carry only 200 PDU sets, the value range of the field is 0 to 199. For another example, if one QoS flow can carry 600 PDUs at most, the value range of the field is 0 to 599.

For another example, if one PDU set can maximally carry only 10 PDUs, the value range of the field is 0 to 9.

The quantity of values of the field is not specifically limited in this embodiment of this application. For example, assuming that the first configuration parameter information is of a sequence (sequence) structure, quantities of values of a plurality of fields included in the sequence structure may depend on a quantity of PDU sets that can be mapped to the DRB. The sequence structure includes a plurality of fields. For a value range of each field, refer to the foregoing descriptions of the value range of the field.

It should be noted that, a type of the need code (need codes) of the field for the first configuration parameter information is not specifically limited in this embodiment of this application. Need codes include a Need S field, a Need R field, a Need M field, and a Need N field.

### Manner 1

Optionally, in an implementation, the type of the need code of the one or more fields is a one-shot operation field, where the one-shot operation field indicates that the terminal device does not store the first configuration parameter information after receiving the first configuration parameter information.

It may be understood that a meaning of the one-shot operation field is literal, that is, the one-shot operation field is used only once, in other words, is configured only once or takes effect only once, and the terminal device does not save or store the one-shot operation field. The one-shot operation field may also be understood as a one-shot configuration that is not maintained, or may be understood as a (configured) field that is not stored and that causes a one-shot action of the terminal device. When receiving a message with the one-shot operation field absent, the terminal device does not take any action. For example, "does not take any action" means: When the field representing the first configuration parameter information does not exist in a received configuration message, the terminal device does not map the to-be-transmitted data by using the first configuration parameter information. For example, the first configuration parameter information may be the Need N field in the need codes.

For example, the access network device sends the DRB configuration to the terminal device, where the DRB configuration includes the first configuration parameter information of the one-shot operation field type. After receiving the one-shot operation field, the terminal device maps, to the DRB by using the first configuration parameter information, the data to be transmitted this time. After the data to be transmitted this time is mapped to the DRB by using the first configuration parameter information, if a DRB configuration is received again, and the DRB configuration does not include first configuration parameter information, the terminal device does not use the first configuration parameter information stored last time. In this way, the first configuration parameter information can be flexibly configured, to respond to a service requirement.

It should be understood that the first configuration parameter in the foregoing example is in the DRB configuration, but this embodiment of this application is not limited thereto. If the first configuration parameter is in another configuration, for example, the SDAP configuration, or another RRC message, refer to the foregoing example of the DRB configuration, and the DRB configuration is replaced with the another configuration, to obtain an implementation for the another configuration.

### Manner 2

Optionally, in another implementation, the type of the need code of the one or more fields is a first-type storage field, where the first-type storage field indicates that the terminal device stores the first configuration parameter information in the terminal device after receiving the first configuration parameter information.

A storage field means that after receiving the storage field, the terminal device may store content of the storage field for next use. The storage field may be understood as a field used by the terminal device for storage (or configuration). Compared with the one-shot field, the storage field is a non-one-shot field. When receiving a message with the storage field absent, the terminal device maintains a current value. For example, a meaning of "the terminal device maintains a current value" is: When a configuration message received this time does not include the field representing the first configuration parameter information, the terminal device maps the to-be-transmitted data by using first configuration parameter information stored last time. For example, the first configuration parameter information may be the Need M field in the need codes.

For example, the access network device sends the DRB configuration to the terminal device, where the DRB configuration includes the first configuration parameter information of the storage operation field type. After receiving the storage operation field, the terminal device maps, to the DRB by using the first configuration parameter information, the data to be transmitted this time. After the data to be transmitted this time is mapped to the DRB by using the first configuration parameter information, if a DRB configuration is received again, and the DRB configuration includes the first configuration parameter information stored last time, the terminal device still uses the first configuration parameter information stored last time. Certainly, if the first configuration parameter information is reconfigured in the DRB configuration that is received again, the data is mapped to the DRB by using reconfigured first configuration parameter information. That is, for the storage field, if content (the first configuration parameter information) of the storage field is not released, the data may be mapped to the DRB by still using the first configuration parameter information. In this way, before the content (the first configuration parameter information) of the storage field is released, the first configuration parameter information may be always used for DRB configuration, to avoid repeated configuration.

It should be understood that the first configuration parameter in the foregoing example is in the DRB configuration, but this embodiment of this application is not limited thereto. If the first configuration parameter is in another configuration, for example, the SDAP configuration, or another RRC message, refer to the foregoing example of the DRB configuration, and the DRB configuration is replaced with the another configuration, to obtain an implementation for the another configuration.

### Manner 3

Optionally, in another implementation, the type of the need code of the one or more fields is a second-type storage field (for example, a releasing field), where the second-type storage field indicates that the terminal device stores the first configuration parameter information in the terminal device after receiving the first configuration parameter information.

The second-type storage field indicates that after receiving the second-type storage field, the terminal device may store content of the second-type storage field for next use. The second-type storage field may be understood as a field used by the terminal device for storage (or configuration). Compared with the one-shot field, the second-type storage field is also a non-one-shot field. For example, the first configuration parameter information may be the Need R field in the need codes. A difference from the Need M field lies in that when receiving a message with the second-type storage field absent, the terminal device releases a current value. For example, a meaning of "the terminal device releases a current value" is: When a configuration message received this time does not include the field representing the first configuration parameter information, the terminal device releases first configuration parameter information stored last time.

For example, the access network device sends the DRB configuration to the terminal device, where the DRB configuration includes the first configuration parameter information of the releasing field type. After receiving the releasing field, the terminal device maps, to the DRB by using the first configuration parameter information, the data to be transmitted this time. After the data to be transmitted this time is mapped to the DRB by using the first configuration parameter information, if a received DRB configuration does not include first configuration parameter information, the terminal device releases the first configuration parameter information stored last time.

It should be understood that the first configuration parameter in the foregoing example is in the DRB configuration, but this embodiment of this application is not limited thereto. If the first configuration parameter is in another configuration, for example, an SDAP configuration, or another RRC message, refer to the foregoing example of the DRB configuration, and the DRB configuration is replaced with the another configuration, to obtain an implementation for the another configuration.

In the manner 3, for the access network device, the access network device may implement the Need R field by releasing (that is, in an explicit configuration manner) or not configuring the field.

That is, the access network device may release the field representing the first configuration parameter information. A specific releasing manner used by the access network device is not specifically limited in this embodiment of this application.

For example, the network device may release the field in the explicit configuration manner.

For another example, when sending a configuration message to the terminal device, the network device does not configure the field in the configuration message. The first configuration parameter information is released by "not configuring the first configuration parameter information". This helps reduce overheads.

### Manner 4

Optionally, in another implementation, the type of the need code of the one or more fields is a standard-defined field.

The standard-defined field indicates that when the terminal device receives a configuration message, if the terminal device finds that the field representing the first configuration parameter information is not included (for example, the configuration field does not exist) or is not configured in the received configuration message, a behavior of the terminal device is predefined in a standard. For example, the terminal device may use an existing rule for mapping data to the DRB, for example, a rule for mapping a QoS flow to the DRB, where a QoS QFI is configured in the SDAP.

For example, the first configuration parameter information may be the Need S field in the need codes.

When the first configuration parameter information is represented by a plurality of fields, meanings represented by the plurality of fields may be determined based on content included in the first configuration parameter information.

For example, when the first configuration parameter information is represented by a plurality of fields, the plurality of fields include a first field, and the first field represents a QoS flow identifier QFI or a QFI list.

It should be understood that the foregoing examples may be properly combined to implement, or may be independently implemented. This is not specifically limited in this embodiment of this application.

It should be noted that, a data structure of the first configuration parameter information is not specifically limited in this embodiment of this application. For example, the data structure includes a sequence structure, a selection structure, an integer structure, an enumeration structure, or an information element (information element, IE) structure. Optionally, in an implementation, the first configuration parameter information is represented by the one or more fields, and a type of the data structure corresponding to the one or more fields is the sequence structure or the integer structure.

For example, the first configuration parameter information sent by the access network device to the terminal device is of the sequence structure. Correspondingly, the first configuration parameter information received by the terminal device is of the sequence structure.

For example, the first configuration parameter information sent by the access network device to the terminal device is of a Boolean (Boolean) type data structure. Correspondingly, the first configuration parameter information received by the terminal device is of the sequence structure.

It may be understood that, the type of the data structure of the first configuration parameter information is not specifically limited in this embodiment of this application. A person skilled in the art may use another appropriate data structure type.

It should be understood that the foregoing descriptions of the field type are applicable regardless of whether the sequence structure or the integer structure is used.

A manner of determining the first configuration parameter information by the access network device is not specifically limited in this embodiment of this application. Optionally, that the access network device determines the first configuration parameter information includes:
The access network device determines the first configuration parameter information according to a policy and charging control PCC rule delivered by a core network device.

A manner in which the access network device sends the first configuration parameter information to the terminal device is not specifically limited in this embodiment of this application.

Optionally, in an embodiment, the access network device sends an RRC message (in other words, RRC signaling) to the terminal device, where the RRC message includes the first configuration parameter information.

Optionally, in an embodiment, the access network device sends downlink control information (downlink control information, DCI) signaling to the terminal device, where the DCI signaling includes the first configuration parameter information.

Optionally, in an embodiment, the access network device sends a medium access control control element (Medium Access control control element, MAC CE) to the terminal device, where the MAC CE includes the first configuration parameter information.

The RRC message, the DCI signaling, or the MAC CE may include a plurality of configurations. A specific configuration that is in the RRC message and in which the first configuration parameter information is included is not specifically limited in this embodiment of this application.

For example, the RRC message includes an SDAP configuration. The first configuration parameter information is carried in the SDAP configuration. That is, an SDAP layer is configured by using the RRC message. When the SDAP layer is configured by using the RRC message, the first configuration parameter information may be included in the SDAP configuration.

For example, the RRC message includes a DRB configuration. The first configuration parameter information is carried in the DRB configuration. That is, the DRB configuration is configured by using the RRC message. When the DRB configuration is configured by using the RRC message, the first configuration parameter information may be included in the DRB configuration.

For the RRC signaling, the RRC signaling is in a case in which a protocol layer sub-header is configured and a case in which a protocol layer sub-header is not configured.

Optionally, when a first protocol layer sub-header exists in the RRC signaling, the first protocol layer sub-header includes the first configuration parameter information (in other words, the first configuration parameter information is carried in the first protocol layer sub-header). When a first protocol layer sub-header does not exist in the RRC signaling, a data unit of a first protocol layer includes the to-be-transmitted data.

The following uses an example in which the RRC signaling includes the DRB configuration, to separately describe manners of configuring the first configuration parameter information in these cases.

### Case 1

Optionally, when the first protocol layer sub-header exists in the DRB configuration, the first protocol layer sub-header includes the first configuration parameter information.

It should be understood that, which protocol layer is the first protocol layer is not specifically limited in this embodiment of this application. The first protocol layer may be a newly defined protocol layer, or may be an existing protocol layer in a current standard.

For example, the first protocol layer may be the SDAP layer. The first protocol layer sub-header is an SDAP header (header). An SDAP-layer sub-header includes a QFI field. The QFI field may identify a specific QoS flow to which an SADP PDU belongs. The SDAP layer sub-header includes the first configuration parameter information. Assuming that the first configuration parameter information includes the PDU set identifier, a specific PDU set to which the SADP PDU belongs may be determined based on the PDU set identifier.

For another example, with evolution of a communication system, a protocol layer may be newly added above the SDAP layer. In this case, the first protocol layer may be a newly defined layer above the SDAP layer, in other words, is a protocol layer not defined in a 3GPP standard protocol (for example, an NR protocol). Correspondingly, a sub-header of the newly defined protocol layer includes the first configuration parameter information. For the newly defined protocol layer, the newly defined protocol layer may identify the first configuration parameter information (for example, the PDU set, the priority of the PDU set, or the sub QoS flow), and a function of the newly added protocol layer is to map the to-be-transmitted data to the DRB or map the to-be-transmitted data to the corresponding first configuration parameter information. That "a function of the newly added protocol layer is to map the to-be-transmitted data to the corresponding first configuration parameter information" may be understood as determining which set of first configuration parameter information the to-be-transmitted data belongs to.

Optionally, the foregoing newly defined protocol layer transmits the to-be-transmitted data packet to the SDAP layer or a PDCP layer.

### Case 2

Optionally, When the first protocol layer sub-header does not exist in the DRB configuration, the data unit of the first protocol layer includes the to-be-transmitted data, and does not include the first configuration parameter information.

For example, an SDAP-layer header does not exist in the DRB configuration. In this case, an SDAP-layer PDU includes only the to-be-transmitted data, and does not include the first configuration parameter information, for example, does not include a QFI field.

The foregoing describes the embodiment of configuring the first configuration parameter information, and the following describes, from a terminal device side, an embodiment on how to map the data to the DRB according to the first rule.

It should be noted that, in this embodiment of this application, there may be a plurality of cases of parameter information included in the first configuration parameter information. Some cases are described below. It should be understood that for descriptions of the following terms, refer to the foregoing descriptions. Details are not described herein again.

Optionally, in an embodiment, the first configuration parameter information includes a list of PDU set identifiers.

Optionally, in an embodiment, the first configuration parameter information includes an importance/priority list of PDU sets.

Optionally, in an embodiment, the first configuration parameter information includes a list of PDU set identifiers and an identifier list of PDUs in the PDU set.

Optionally, in an embodiment, the first configuration parameter information includes a list of PDU set identifiers and an importance/priority list of PDUs in the PDU set.

Optionally, in an embodiment, the first configuration parameter information includes a list of PDU set identifiers and the dependency identifier of the PDU set.

Optionally, in an embodiment, the first configuration parameter information includes an importance/priority list of PDU sets and an identifier list of PDUs in the PDU set.

Optionally, in an embodiment, the first configuration parameter information includes an importance/priority list of PDU sets and an importance/priority list of PDUs in the PDU set.

Optionally, in an embodiment, the first configuration parameter information includes an importance/priority list of PDU sets and a dependency identifier of the PDU set.

Optionally, in an embodiment, the first configuration parameter information includes the index parameter.

Optionally, in an embodiment, the first configuration parameter information includes the sub QoS flow parameter.

Optionally, in an embodiment, the first configuration parameter information includes a list of PDU set identifiers and the QoS flow identifier QFI.

Optionally, in an embodiment, the first configuration parameter information includes an importance/priority list of PDU sets and the QoS flow identifier QFI.

Optionally, in an embodiment, the first configuration parameter information includes a list of PDU set identifiers, an identifier list of PDUs in the PDU set, and the QoS flow identifier QFI.

Optionally, in an embodiment, the first configuration parameter information includes a list of PDU set identifiers, an importance/priority list of PDUs in the PDU set, and the QoS flow identifier QFI.

Optionally, in an embodiment, the first configuration parameter information includes a list of PDU set identifiers, a dependency identifier of the PDU set, and the QoS flow identifier QFI.

Optionally, in an embodiment, the first configuration parameter information includes an importance/priority list of PDU sets, an identifier list of PDUs in the PDU set, and the QoS flow identifier QFI.

Optionally, in an embodiment, the first configuration parameter information includes an importance/priority list of PDU sets, an importance/priority list of PDUs in the PDU set, and the QoS flow identifier QFI.

Optionally, in an embodiment, the first configuration parameter information includes an importance/priority list of PDU sets, a dependency identifier of the PDU set, and the QoS flow identifier QFI.

Optionally, in an embodiment, the first configuration parameter information includes the index parameter and the QoS flow identifier QFI.

Optionally, in an embodiment, the first configuration parameter information includes the sub QoS flow parameter and the QoS flow identifier QFI.

Optionally, in an embodiment, the first configuration parameter information includes a list of PDU set identifiers and the QoS flow identifier QFI list.

Optionally, in an embodiment, the first configuration parameter information includes an importance/priority list of PDU sets and the QoS flow identifier QFI list.

Optionally, in an embodiment, the first configuration parameter information includes a list of PDU set identifiers, an identifier list of PDUs in the PDU set, and the QoS flow identifier QFI list.

Optionally, in an embodiment, the first configuration parameter information includes a list of PDU set identifiers, an importance/priority list of PDUs in the PDU set, and the QoS flow identifier QFI list.

Optionally, in an embodiment, the first configuration parameter information includes a list of PDU set identifiers, a dependency identifier of the PDU set, and the QoS flow identifier QFI list.

Optionally, in an embodiment, the first configuration parameter information includes an importance/priority list of PDU sets, an identifier list of PDUs in the PDU set, and the QoS flow identifier QFI list.

Optionally, in an embodiment, the first configuration parameter information includes an importance/priority list of PDU sets, an importance/priority list of PDUs in the PDU set, and the QoS flow identifier QFI list.

Optionally, in an embodiment, the first configuration parameter information includes an importance/priority list of PDU sets, a dependency identifier of the PDU set, and the QoS flow identifier QFI list.

Optionally, in an embodiment, the first configuration parameter information includes the index parameter and the QoS flow identifier QFI list.

Optionally, in an embodiment, the first configuration parameter information includes the sub QoS flow parameter and the QoS flow identifier QFI list.

It should be understood that for the terms included in the first configuration parameter information in the foregoing embodiments, refer to the foregoing descriptions. For brevity, details are not described herein again.

With reference to the specific parameter information included in the first configuration parameter information, the following describes an embodiment of performing mapping based on the first configuration parameter information.

In some embodiments, the terminal device may map the to-be-transmitted data to the DRB according to a rule for mapping the PDU set to the DRB.

Optionally, the first configuration parameter information includes the list of PDU set identifiers, and the list of PDU set identifiers includes an identifier of a first PDU set and an identifier of a second PDU set. Correspondingly, the terminal device maps a first PDU set and a second PDU set of each QoS flow in the QoS flow list to the DRB according to the identifier of the first PDU set and the identifier of the second PDU set, where the QoS flow list includes one or more QoS flow identifiers, and a PDU set of the to-be-transmitted data is the first PDU set or the second PDU set.

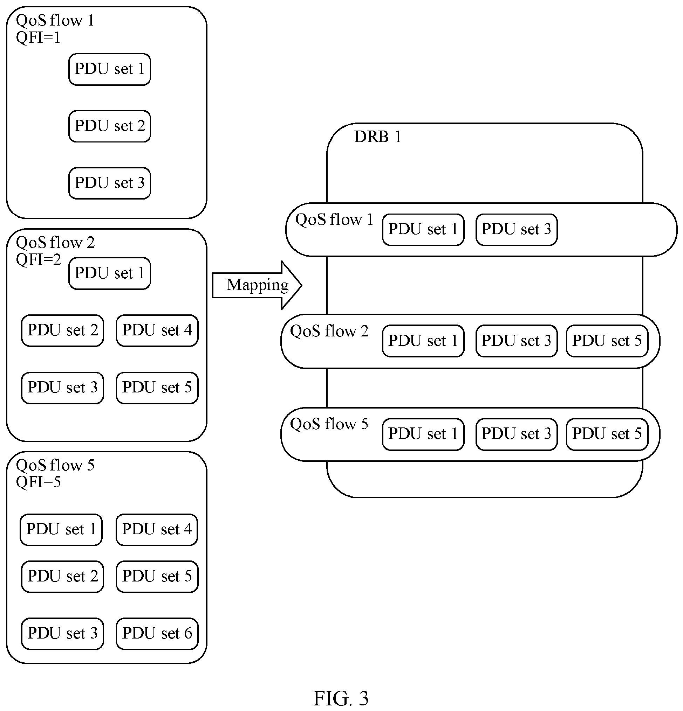

For example, the first configuration parameter information received by the terminal device includes: the list of PDU set identifiers. For example, the list of PDU set identifiers includes a PDU set 1, a PDU set 3, and a PDU set 5. In addition, the DRB configuration received by the terminal device includes a DRB ID 1. Assuming that the first configuration parameter information does not include a QoS flow list, the first configuration parameter information is applied to the QoS flow list in the SDAP configuration. For example, the QoS flow list in the SDAP configuration includes: a QoS flow 1, a QoS flow 2, and a QoS flow 5. As shown in FIG. 3, a PDU set 1 and a PDU set 3 in the QoS flow 1, a PDU set 1, a PDU set 3, and a PDU set 5 in the QoS flow 2, and a PDU set 1, a PDU set 3, and a PDU set 5 in the QoS flow 5 may be mapped to a DRB 1 identified by the DRB ID 1.

It should be understood that the example in FIG. 3 is described by using an example in which the first configuration parameter information is applied to the QoS flow list in the SDAP configuration, but this embodiment of this application is not limited thereto. For example, if the first configuration parameter information also includes a QoS flow list, the foregoing mapping needs to be subject to the QoS flow list included in the first configuration parameter information.

It should be further understood that, the foregoing embodiment of mapping the to-be-transmitted data to the DRB by using the PDU set as a granularity is described by using the rule for mapping the PDU set to the DRB as an example, but this embodiment of this application is not limited thereto. For example, a person skilled in the art may obtain a related embodiment of a rule for mapping a PDU to the DRB based on the foregoing embodiment of the rule for mapping the PDU set to the DRB. For brevity, details are not described herein again.

In some embodiments, the terminal device may map the to-be-transmitted data to the DRB according to the rule for mapping the PDU to the DRB.

Optionally, the first configuration parameter information includes the list of PDU set identifiers and the priority list of the PDUs in the PDU set, the list of PDU set identifiers includes an identifier of a third PDU set and an identifier of a fourth PDU set, and the priority list of the PDUs in the PDU set includes a first priority index and a second priority index, where the first priority index identifies a PDU with a first priority in the PDU set, and the second priority index identifies a PDU with a second priority in the PDU set.

Correspondingly, the terminal device maps a PDU with the first priority in the third PDU set and a PDU with the first priority in the fourth PDU set to a first DRB according to the identifier of the third PDU set, the identifier of the fourth PDU set, and the priority list of the PDUs in the PDU set; and
maps a PDU with the second priority in the third PDU set and a PDU with the second priority in the fourth PDU set to a second DRB according to the identifier of the third PDU set, the identifier of the fourth PDU set, and the priority list of the PDUs in the PDU set.

A priority index of a PDU set of the to-be-transmitted data is the first priority index or the second priority index.

For example, the first set of configuration parameter information received by the terminal device includes: a list of PDU set identifiers (a PDU set 1 and a PDU set 2) and a priority list of PDUs in a PDU set (a PDU 3 in the PDU set and a PDU 4 in the PDU set). The first set of configuration parameter information is applied to the QoS flow list, for example, a QoS flow 1 and a QoS flow 2, in the SDAP configuration.

The second set of configuration parameter information received by the terminal device includes: a list of PDU set identifiers (a PDU set 1, a PDU set 3, and a PDU set 4) and a priority list of PDUs in a PDU set (a PDU 1 in the PDU set and a PDU 2 in the PDU set). The second set of configuration parameter information is applied to the QoS flow 1, the QoS flow 2, and a QoS flow 3.

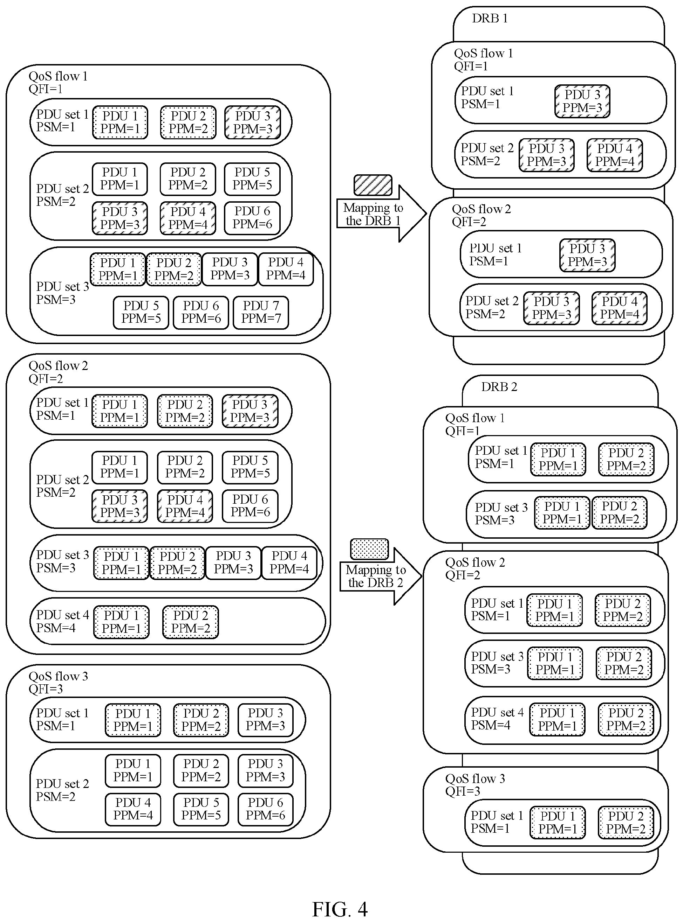

As shown in FIG. 4, the terminal device may map a PDU 3 in a PDU set 1 and a PDU 3 and a PDU 4 in a PDU set 2 in the QoS flow 1 and a PDU 3 in a PDU set 1 and a PDU 3 and a PDU 4 in a PDU set 2 in the QoS flow 2 to a DRB 1 identified by a DRB ID 1.

As shown in FIG. 4, the terminal device may map a PDU 1 and a PDU 2 in the PDU set 1 and a PDU 1 and a PDU 2 in a PDU set 3 in the QoS flow 1, a PDU 1 and a PDU 2 in the PDU set 1, a PDU 1 and a PDU 2 in a PDU set 3, and a PDU 1 and a PDU 2 in a PDU set 4 in the QoS flow 2, and a PDU 1 and a PDU 2 in a PDU set 1 in the QoS flow 3 to a DRB 2 identified by a DRB ID 2.

It should be further understood that the example shown in FIG. 4 is described by using an example in which the priority list of the PDUs in the PDU set is applicable to PDU sets in a plurality of QoS flows. However, this embodiment of this application is not limited thereto. For example, the priority list of the PDUs in the PDU set may alternatively be applied to only a specific PDU set of a specific QoS flow.

Optionally, the first configuration parameter information includes the list of PDU set identifiers, a priority list of PDUs in a fifth PDU set, and a priority list of PDUs in a sixth PDU set, where the list of PDU set identifiers includes an identifier of the fifth PDU set and an identifier of the sixth PDU set, the priority list of the PDUs in the fifth PDU set includes a PDU with a first priority index and a PDU with a second priority index, and the priority list of the PDUs in the sixth PDU set includes a PDU with the first priority index and a PDU with the second priority index.

The mapping the to-be-transmitted data to the DRB according to the first rule includes:
mapping the PDU with the first priority index in the fifth PDU set and the PDU with the first priority index in the sixth PDU set to a first DRB according to the identifier of the fifth PDU set, the identifier of the sixth PDU set, and the priority list of the PDUs in the fifth PDU set; and
mapping the PDU with the second priority index in the fifth PDU set and the PDU with the second priority index in the sixth PDU set to a second DRB according to the identifier of the fifth PDU set, the identifier of the sixth PDU set, and the priority list of the PDUs in the second PDU set.

A priority index of a PDU set of the to-be-transmitted data is the first priority index or the second priority index.

For example, the first set of configuration parameter information received by the terminal device includes: the list of PDU set identifiers (a PDU set 1 and a PDU set 2), a priority list of PDUs in the PDU set 1 (a PDU 3 in the PDU set 1), and a priority list of PDUs in the PDU set 2 (a PDU 1 in the PDU set 2 and a PDU 2 in the PDU set 2). The first set of configuration parameter information is applied to the QoS flow list, for example, a QoS flow 1 and a QoS flow 2, in the SDAP configuration.

The second set of configuration parameter information received by the terminal device includes: a list of PDU set identifiers (a PDU set 3 and a PDU set 4), a priority list of PDUs in the PDU set 3 (a PDU 1 in the PDU set 3 and a PDU 2 in the PDU set 3), and a priority list of PDUs in the PDU set 4 (a PDU 1 in the PDU set 4 and a PDU 2 in the PDU set). The second set of configuration parameter information is applied to the QoS flow 1, the QoS flow 2, and a QoS flow 3.

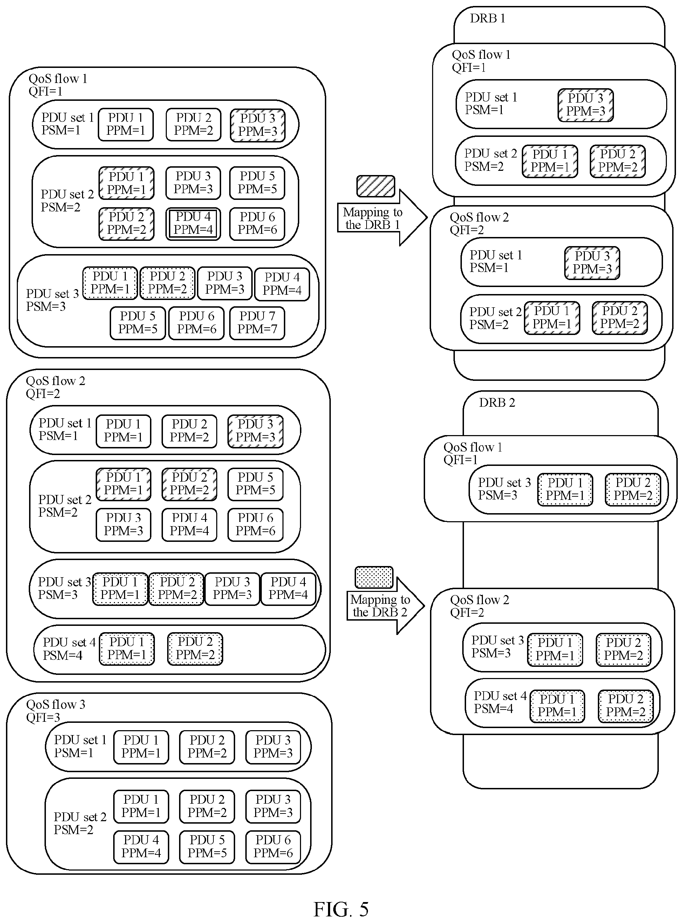

As shown in FIG. 5, the terminal device may map a PDU 3 in a PDU set 1 and a PDU 1 and a PDU 2 in a PDU set 2 in the QoS flow 1 and a PDU 3 in a PDU set 1 and a PDU 1 and a PDU 2 in a PDU set 2 in the QoS flow 2 to a DRB 1 identified by a DRB ID 1.

As shown in FIG. 5, the terminal device may map a PDU 1 and a PDU 2 in a PDU set 3 in the QoS flow 1 and a PDU 1 and a PDU 2 in a PDU set 3 and a PDU 1 and a PDU 2 in a PDU set 4 in the QoS flow 2 to a DRB 2 identified by a DRB ID 2.

In some embodiments, the terminal device may map the to-be-transmitted data to the DRB according to the rule for mapping the PDU to the DRB.

Optionally, the first configuration parameter information includes a first index parameter, a second index parameter, and a fifth QFI, where the first index parameter identifies a first PDU, the second index parameter identifies a second PDU, the fifth QFI identifies a fifth QoS flow, and the first PDU and the second PDU are PDUs in the fifth QoS flow. Correspondingly, the terminal device maps the first PDU and the second PDU in the fifth QoS flow to a first DRB according to the first index parameter, the second index parameter, and the fifth QFI.

It should be understood that, the foregoing provides descriptions merely by using the first index parameter and the second index parameter as an example. This embodiment of this application is not limited thereto. In fact, the first configuration parameter information may include one or more index parameters.

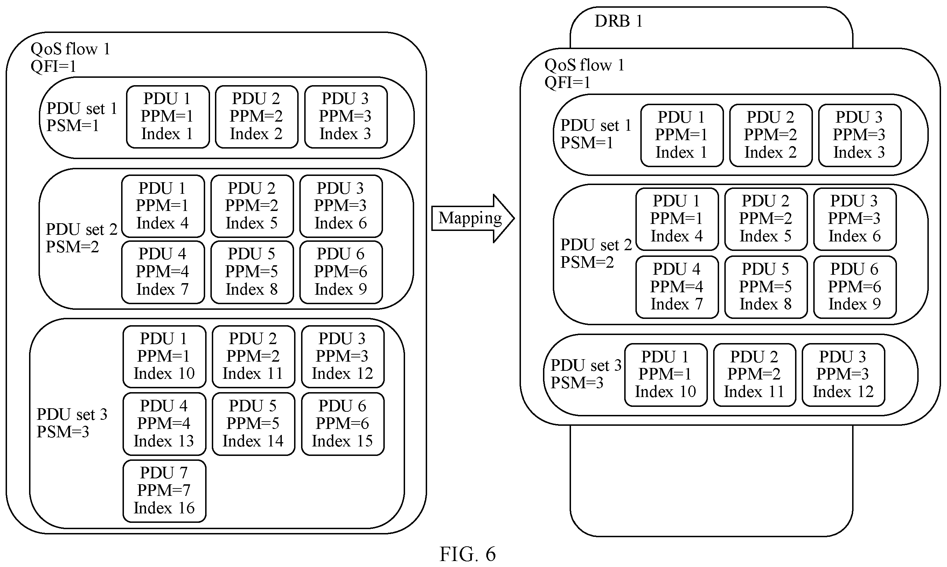

For example, the first configuration parameter information received by the terminal device includes: a QFI 1 and a plurality of index parameters (including index1 to index12). In addition, the DRB configuration received by the terminal device includes a DRB ID 1. As shown in FIG. 6, PDUs identified by index1 to index12 in a QoS flow 1 may be mapped to a DRB 1 identified by the DRB ID 1.

In some embodiments, the terminal device may map the to-be-transmitted data to the DRB according to a rule for mapping the sub QoS flow to the DRB.

Optionally, the first configuration parameter information includes a first sub QoS flow parameter, a second sub QoS flow parameter, a first QFI, and a second QFI, where the first QFI identifies a first QoS flow, the second QFI identifies a second QoS flow, the first sub QoS flow parameter identifies a first sub QoS flow in a QoS flow, the second sub QoS flow parameter identifies a second sub QoS flow in a QoS flow, the first QoS flow includes one or more sub QoS flows, and the second QoS flow includes one or more sub QoS flows. Correspondingly, the terminal device maps a first sub QoS flow and a second sub QoS flow in the first QoS flow and a first sub QoS flow and a second sub QoS flow in the second QoS flow to a first DRB according to the first sub QoS flow parameter, the second sub QoS flow parameter, the first QFI, and the second QFI. A sub QoS flow of the to-be-transmitted data is the first sub QoS flow or the second sub QoS flow.

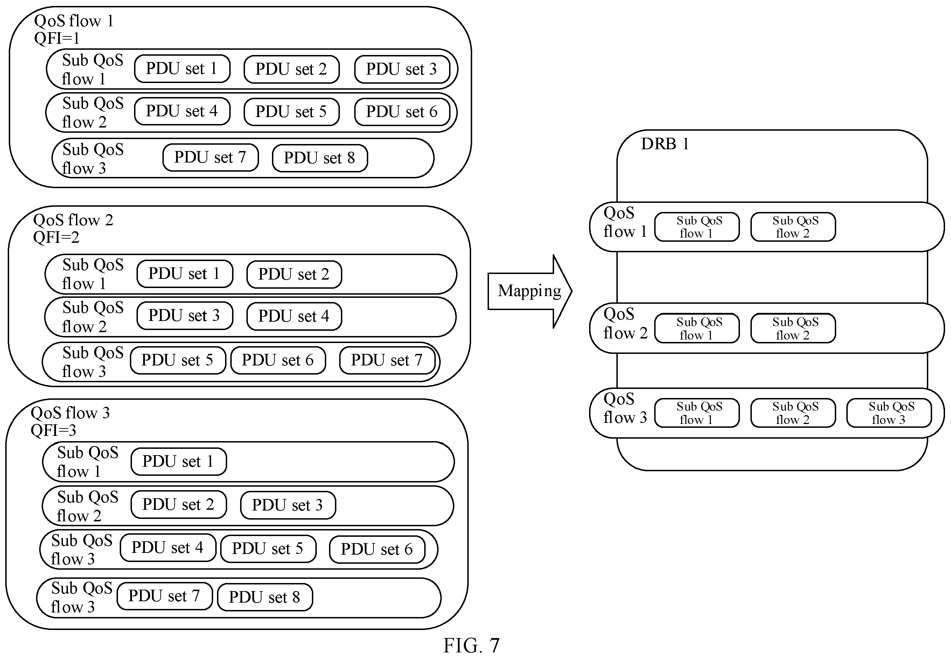

For example, the first configuration parameter information received by the terminal device includes: a sub QoS flow parameter 1, a sub QoS flow parameter 2, a sub QoS flow parameter 3, and the QoS flow list (a QoS flow 1, a QoS flow 2, and a QoS flow 3). In addition, the DRB configuration received by the terminal device includes a DRB ID 1. As shown in FIG. 7, a sub QoS flow 1 identified by the sub QoS flow parameter 1 and a sub QoS flow 2 identified by the sub QoS flow parameter 2 in the QoS flow 1, a sub QoS flow 1 identified by the sub QoS flow parameter 1 and a sub QoS flow 2 identified by the sub QoS flow parameter 2 in the QoS flow 2, and a sub QoS flow 1 identified by the sub QoS flow parameter 1, a sub QoS flow 2 identified by the sub QoS flow parameter 2, and a sub QoS flow 3 identified by the sub QoS flow parameter 3 in the QoS flow 3 may be mapped to a DRB 1 identified by the DRB ID 1.

It should be understood that the illustrated mapping manners are merely exemplary descriptions, and this embodiment of this application is not limited thereto.

It should be further understood that the example shown in FIG. 7 is described by using an example in which the sub QoS flow parameter is applicable to a plurality of QoS flows, but this embodiment of this application is not limited thereto. For example, the sub QoS flow parameter may alternatively be applied to only one specific QoS flow.

Optionally, the first configuration parameter information includes a first sub QoS flow parameter, a second sub QoS flow parameter, a third QFI, and a fourth QFI, the third QFI identifies a third QoS flow, the fourth QFI identifies a fourth QoS flow, the first sub QoS flow parameter identifies a first sub QoS flow in the third QoS flow, and the second sub QoS flow parameter identifies a second sub QoS flow in the fourth QoS flow. Correspondingly, the terminal device maps the first sub QoS flow in the third QoS flow and the second sub QoS flow in the fourth QoS flow to a first DRB according to the first sub QoS flow parameter, the second sub QoS flow parameter, the third QFI, and the fourth QFI.

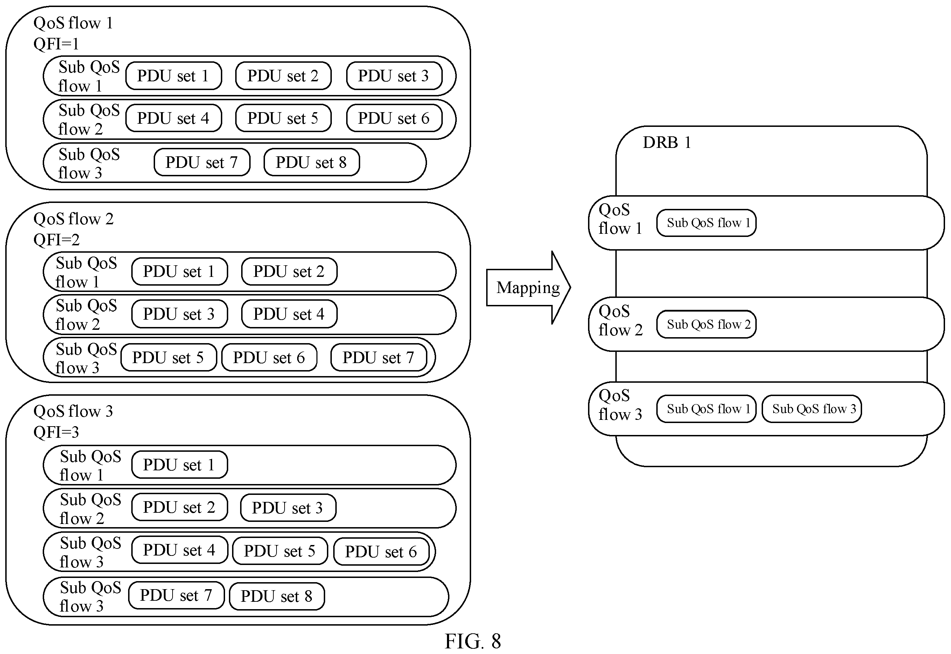

For example, the first configuration parameter information received by the terminal device includes: a sub QoS flow parameter 1 in a QoS flow 1, a sub QoS flow parameter 2 in a QoS flow 2, a sub QoS flow parameter 1 and a sub QoS flow parameter 3 in a QoS flow 3, and the QoS flow list (the QoS flow 1, the QoS flow 2, and the QoS flow 3). In addition, the DRB configuration received by the terminal device includes a DRB ID 1. As shown in FIG. 8, a sub QoS flow 1 in the QoS flow 1, a sub QoS flow 2 in the QoS flow 2, and a sub QoS flow 1 and a sub QoS flow 3 in the QoS flow 3 may be mapped to a DRB 1 identified by the DRB ID 1.

It should be understood that the examples in FIG. 3 to FIG. 8 are merely for ease of understanding, and are not intended to limit the embodiments of this application to the examples in the figures. In fact, a person skilled in the art may perform equivalent transformations based on the examples in FIG. 3 to FIG. 8 to obtain more implementations.

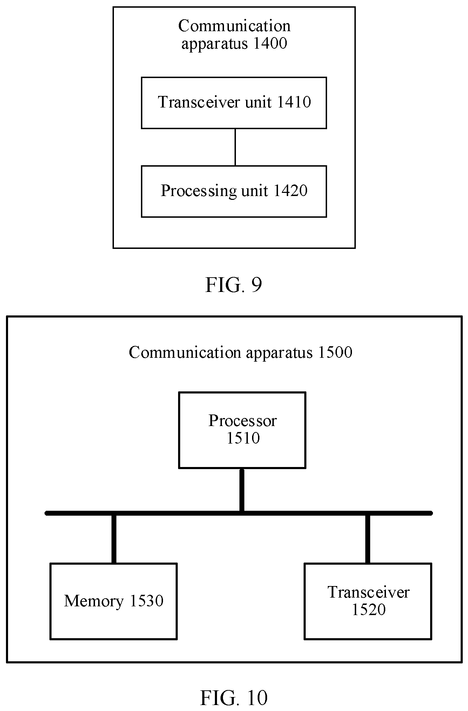

With reference to FIG. 1 to FIG 8, the foregoing describes in detail the communication method provided in the embodiments of this application. An apparatus embodiment of this application is described in detail below with reference to FIG. 9. It should be understood that, a communication apparatus in the embodiments of this application may perform various communication methods in the foregoing embodiments of this application. In other words, for specific operating processes of the following various products, refer to corresponding processes in the foregoing method embodiments.

In the foregoing embodiments, the terminal device may perform some or all of the steps in the embodiments. These steps or operations are merely examples, and other operations or various operation variations may further be performed in the embodiments of this application. In addition, the steps may be performed in an order different from those presented in the embodiments, and not all operations in the embodiments of this application may be performed. In addition, sequence numbers of the steps do not mean execution sequences. The execution sequences of the processes should be determined according to functions and internal logic of the processes, and should not be construed as any limitation on implementation processes of the embodiments of this application.

FIG. 9 is a schematic block diagram of a communication apparatus according to an embodiment of this application. As shown in FIG. 9, the communication apparatus 1400 may include a transceiver unit 1410 and a processing unit 1420.

In a possible design, the communication apparatus 1400 may correspond to the terminal device in the foregoing method embodiments or a component (for example, a circuit, a chip, or a chip system) configured in the terminal device.

In some embodiments, the transceiver unit 1410 is configured to receive first configuration parameter information, where the first configuration parameter information is used for determining a first rule, the first rule is a rule for mapping a first data flow to a data radio bearer DRB, and the first data flow is a protocol data unit PDU set, a PDU, a sub quality of service QoS flow, a data flow at a finer granularity than a QoS flow, a data flow included in a QoS flow, a data flow mapped to a QoS flow, or a data flow mapped to a sub QoS flow.

The processing unit 1420 is configured to map to-be-transmitted data to the DRB according to the first rule.

Optionally, in an embodiment, the first configuration parameter information includes one or more of the following information: a protocol data unit PDU set identifier, a priority identifier of a PDU set, a dependency identifier of a PDU set, an identifier of a PDU in a PDU set, a priority identifier of a PDU in a PDU set, an index parameter, a sub QoS flow parameter, a data packet size of a PDU set, and a delay of a PDU set, where the index parameter represents a PDU index in a QoS flow.

Optionally, in an embodiment, the first configuration parameter information is represented by one or more fields. The method further includes:
The processing unit 1420 is further configured to determine one or more of the following: a value range of the one or more fields, a data structure of the one or more fields, a quantity of values of the one or more fields, and a need code of the one or more fields.

Optionally, in an embodiment, a type of the one or more fields is a one-shot operation field, where the one-shot operation field indicates that the terminal device does not store the first configuration parameter information after receiving the first configuration parameter information.

Optionally, in an embodiment, a type of the one or more fields is a first-type storage field, where the first-type storage field indicates that the terminal device stores the first configuration parameter information in the terminal device after receiving the first configuration parameter information.

Optionally, in an embodiment, a type of the data structure corresponding to the one or more fields is a sequence structure or an integer structure.

Optionally, in an embodiment, the first configuration parameter information is represented by a plurality of fields, the plurality of fields include a first field, and the first field represents a QoS flow identifier QFI or a QFI list.

Optionally, in an embodiment, that the transceiver unit 1410 is configured to receive first configuration parameter information specifically includes:
receiving radio resource control RRC signaling from an access network device, where the RRC signaling includes the first configuration parameter information.

Optionally, in an embodiment, the first configuration parameter information is included in a service data adaptation protocol SDAP configuration in the RRC signaling, or the first configuration parameter information is included in a DRB configuration in the RRC signaling.

Optionally, in an embodiment, the first configuration parameter information includes a list of PDU set identifiers, and the list of PDU set identifiers includes an identifier of a first PDU set and an identifier of a second PDU set.

That the processing unit 1420 is configured to map to-be-transmitted data to the DRB according to the first rule specifically includes:
mapping a first PDU set and a second PDU set of each QoS flow in a QoS flow list to the DRB according to the identifier of the first PDU set and the identifier of the second PDU set, where the QoS flow list includes one or more QoS flow identifiers.

A PDU set of the to-be-transmitted data is the first PDU set or the second PDU set.

Optionally, in an embodiment, the first configuration parameter information includes a list of PDU set identifiers and a priority list of PDUs in a PDU set, the list of PDU set identifiers includes an identifier of a third PDU set and an identifier of a fourth PDU set, and the priority list of the PDUs in the PDU set includes a first priority index and a second priority index, where the first priority index identifies a PDU with a first priority in the PDU set, and the second priority index identifies a PDU with a second priority in the PDU set.

That the processing unit 1420 is configured to map to-be-transmitted data to the DRB according to the first rule specifically includes:
mapping a PDU with the first priority in the third PDU set and a PDU with the first priority in the fourth PDU set in one or more QoS flows to a first DRB according to the identifier of the third PDU set, the identifier of the fourth PDU set, and the priority list of the PDUs in the PDU set; and
mapping a PDU with the second priority in the third PDU set and a PDU with the second priority in the fourth PDU set in the one or more QoS flows to a second DRB according to the identifier of the third PDU set, the identifier of the fourth PDU set, and the priority list of the PDUs in the PDU set.

A priority index of a PDU set of the to-be-transmitted data is the first priority index or the second priority index.

Optionally, in an embodiment, the first configuration parameter information includes a list of PDU set identifiers, a priority list of PDUs in a fifth PDU set, and a priority list of PDUs in a sixth PDU set, where the list of PDU set identifiers includes an identifier of the fifth PDU set and an identifier of the sixth PDU set, the priority list of the PDUs in the fifth PDU set includes a PDU with a first priority index and a PDU with a second priority index, and the priority list of the PDUs in the sixth PDU set includes a PDU with the first priority index and a PDU with the second priority index.

That the processing unit 1420 is configured to map to-be-transmitted data to the DRB according to the first rule specifically includes:
mapping the PDU with the first priority index in the fifth PDU set and the PDU with the first priority index in the sixth PDU set to a first DRB according to the identifier of the fifth PDU set, the identifier of the sixth PDU set, and the priority list of the PDUs in the fifth PDU set; and
mapping the PDU with the second priority index in the fifth PDU set and the PDU with the second priority index in the sixth PDU set to a second DRB according to the identifier of the fifth PDU set, the identifier of the sixth PDU set, and the priority list of the PDUs in the second PDU set.

A priority index of a PDU set of the to-be-transmitted data is the first priority index or the second priority index.

Optionally, in an embodiment, a QoS flow identifier of the one or more QoS flows is included in the QoS flow list, and the QoS flow list is carried in SDAP configuration information.

Optionally, in an embodiment, the first configuration parameter information includes a first sub QoS flow parameter, a second sub QoS flow parameter, a first QFI, and a second QFI, the first QFI identifies a first QoS flow, the second QFI identifies a second QoS flow, the first sub QoS flow parameter identifies a first sub QoS flow in a QoS flow, the second sub QoS flow parameter identifies a second sub QoS flow in a QoS flow, the first QoS flow includes one or more sub QoS flows, and the second QoS flow includes one or more sub QoS flows.

That the processing unit 1420 is configured to map to-be-transmitted data to the DRB according to the first rule specifically includes:
mapping a first sub QoS flow and a second sub QoS flow in the first QoS flow and a first sub QoS flow and a second sub QoS flow in the second QoS flow to a first DRB according to the first sub QoS flow parameter, the second sub QoS flow parameter, the first QFI, and the second QFI.

A sub QoS flow of the to-be-transmitted data is the first sub QoS flow or the second sub QoS flow.

Optionally, in an embodiment, the first configuration parameter information includes a first sub QoS flow parameter, a second sub QoS flow parameter, a third QFI, and a fourth QFI, the third QFI identifies a third QoS flow, the fourth QFI identifies a fourth QoS flow, the first sub QoS flow parameter identifies a first sub QoS flow in the third QoS flow, and the second sub QoS flow parameter identifies a second sub QoS flow in the fourth QoS flow.

That the processing unit 1420 is configured to map data of one or more QoS flows to the data radio bearer DRB according to the first rule includes:
mapping the first sub QoS flow in the third QoS flow and the second sub QoS flow in the fourth QoS flow to a first DRB according to the first sub QoS flow parameter, the second sub QoS flow parameter, the third QFI, and the fourth QFI.

Optionally, in an embodiment, the first configuration parameter information includes a first index parameter, a second index parameter, and a fifth QFI, where the first index parameter identifies a first PDU, the second index parameter identifies a second PDU, the fifth QFI identifies a fifth QoS flow, and the first PDU and the second PDU are PDUs in the fifth QoS flow.

That the processing unit 1420 is configured to map data of one or more QoS flows to the data radio bearer DRB according to the first rule includes:
mapping the first PDU and the second PDU in the fifth QoS flow to a first DRB according to the first index parameter, the second index parameter, and the fifth QFI.

Optionally, in an embodiment, the first configuration parameter information further includes a correspondence between the index parameter and a PDU in a PDU set.

Optionally, in an embodiment, the processing unit 1420 is further configured to determine configuration parameter information corresponding to the to-be-transmitted data as the first configuration parameter information before mapping the to-be-transmitted data to the data radio bearer DRB.

Optionally, in an embodiment, when a first protocol layer sub-header exists in the RRC signaling, the first configuration parameter information is carried in the first protocol layer sub-header.

Optionally, As an embodiment, when the first protocol layer sub-header in the RRC signaling does not exist, the data unit of the first protocol layer includes the to-be-transmitted data.

It should be understood that the communication apparatus 1400 may correspond to the terminal device in the method 200 according to the embodiments of this application, and the communication apparatus 1400 may include units configured to perform a method performed by the terminal device in the method 200 in FIG. 2. In addition, the units in the communication apparatus 1400 and the foregoing other operations and/or functions are respectively intended to implement a corresponding process of the method 200 in FIG. 2.

It should be further understood that when the communication apparatus 1400 is the terminal device, the transceiver unit 1410 in the communication apparatus 1400 may be implemented by a transceiver, for example, may correspond to a transceiver 1520 in a communication apparatus 1500 shown in FIG. 10. The processing unit 1420 in the communication apparatus 1400 may be implemented by at least one processor, for example, may correspond to a processor 1510 in the communication apparatus 1500 shown in FIG. 10.

It should be further understood that when the communication apparatus 1400 is a chip or a chip system configured in the foregoing terminal device, the transceiver unit 1410 in the communication apparatus 1400 may be implemented by an input/output interface, and the processing unit 1420 in the communication apparatus 1400 may be implemented by a processor, a microprocessor, an integrated circuit, or the like integrated on the chip or the chip system.

In a possible design, the communication apparatus 1400 may correspond to the access network device in the foregoing method embodiments or a component (for example, a circuit, a chip, or a chip system) configured in the access network device.

In some embodiments, the processing unit 1420 is configured to determine first configuration parameter information, where the first configuration parameter information includes one or more of the following information: a protocol data unit PDU set identifier, a priority identifier of a PDU set, a dependency identifier of a PDU set, an identifier of a PDU in a PDU set, a priority identifier of a PDU in a PDU set, an index parameter, a sub quality of service QoS flow parameter, a data packet size of a PDU set, and a delay of a PDU set, where the index parameter represents a PDU index in a QoS flow.

The transceiver unit 1410 is configured to send the first configuration parameter information to a terminal device.

Optionally, in an embodiment, the processing unit 1420 is further configured to:
release the first configuration parameter information, where the releasing the first configuration parameter information is implemented by not configuring the first configuration parameter information.

Optionally, in an embodiment, that the processing unit 1420 is configured to determine first configuration parameter information specifically includes:
determining the first configuration parameter information according to a policy and charging control PCC rule delivered by a core network device.

Optionally, in an embodiment, that the transceiver unit 1410 is configured to send the first configuration parameter information to a terminal device specifically includes:
sending radio resource control RRC signaling to the terminal device, where the RRC signaling includes the first configuration parameter information.

Optionally, in an embodiment, the first configuration parameter information is included in a service data adaptation protocol SDAP configuration in the RRC signaling, or the first configuration parameter information is included in a data radio bearer DRB configuration in the RRC signaling.

It should be understood that the communication apparatus 1400 may correspond to the access network device in the method 200 according to the embodiments of this application, and the communication apparatus 1400 may include units configured to perform a method performed by the access network device in the method 200 in FIG. 2. In addition, the units in the communication apparatus 1400 and the foregoing other operations and/or functions are respectively intended to implement a corresponding process of the method 200 in FIG. 2.

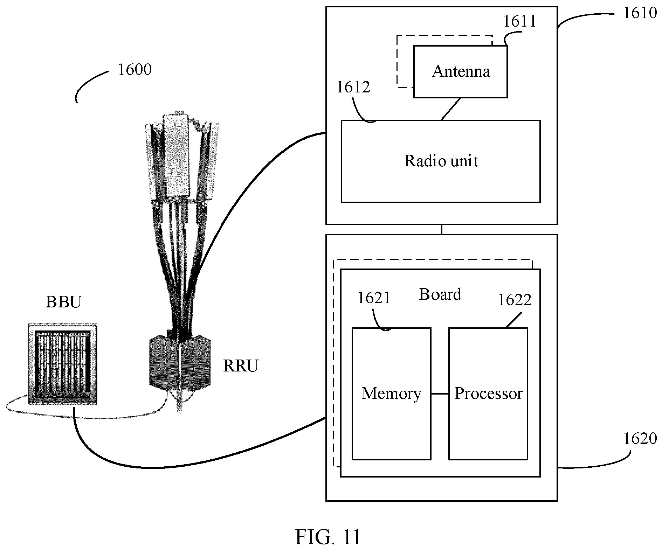

It should be further understood that when the communication apparatus 1400 is the access network device, the transceiver unit 1410 in the communication apparatus 1400 may be implemented by a transceiver, for example, may correspond to a transceiver 1520 in a communication apparatus 1500 shown in FIG. 10 or an RRU 1610 in a base station 1600 shown in FIG. 11. The processing unit 1420 in the communication apparatus 1400 may be implemented by at least one processor, for example, may correspond to a processor 1510 in the communication apparatus 1500 shown in FIG. 10 or a BBU 1620 in the base station 1600 shown in FIG. 11.

It should be further understood that when the communication apparatus 1400 is a chip or a chip system configured in the foregoing access network device, the transceiver unit 1410 in the communication apparatus 1400 may be implemented by an input/output interface, and the processing unit 1420 in the communication apparatus 1400 may be implemented by a processor, a microprocessor, an integrated circuit, or the like integrated on the chip or the chip system.

FIG. 10 is another schematic block diagram of a communication apparatus 1500 according to an embodiment of this application. As shown in FIG. 10, the communication apparatus 1500 includes a processor 1510, a transceiver 1520, and a memory 1530. The processor 1510, the transceiver 1520, and the memory 1530 communicate with each other through an internal connection path. The memory 1530 is configured to store instructions. The processor 1510 is configured to execute the instructions stored in the memory 1530, to control the transceiver 1520 to send a signal and/or receive a signal.

Optionally, the memory 1530 may include a read-only memory and a random access memory, and provide the instructions and data to the processor. A part of the memory may further include a nonvolatile random access memory. The memory 1530 may be an independent component, or may be integrated into the processor 1510.

In an implementation, the communication apparatus 1500 may correspond to the terminal device in the foregoing method embodiments, and may be configured to perform the steps and/or processes performed by the terminal device in the foregoing method embodiments. The processor 1510 may be configured to execute the instructions stored in the memory 1530; and when the processor 1510 executes the instructions stored in the memory, the processor 1510 is configured to perform the steps and/or processes in the foregoing method embodiments corresponding to the terminal device.

In another implementation, optionally, the communication apparatus 1500 may be the access network device in the foregoing embodiments, and may be configured to perform the steps and/or processes performed by the access network device in the foregoing method embodiments. The processor 1510 may be configured to execute the instructions stored in the memory 1530; and when the processor 1510 executes the instructions stored in the memory, the processor 1510 is configured to perform the steps and/or processes in the foregoing method embodiments corresponding to the access network device.

The transceiver 1520 may include a transmitter and a receiver. The transceiver 1520 may further include an antenna, and there may be one or more antennas. The processor 1510, the memory 1530, and the transceiver 1520 may be components integrated on different chips. For example, the processor 1510 and the memory 1530 may be integrated into a baseband chip, and the transceiver 1520 may be integrated into a radio frequency chip. The processor 1510, the memory 1530, and the transceiver 1520 may alternatively be components integrated on a same chip. This is not limited in this application.

Optionally, the communication apparatus 1500 may be a component, for example, a chip or a chip system, configured in the access network device.

The transceiver 1520 may alternatively be a communication interface, for example, an input/output interface. The transceiver 1520, the processor 1510, and the memory 1530 may be integrated into a same chip, for example, integrated into a baseband chip.

FIG. 11 is a schematic structural diagram of an access network device according to an embodiment of this application, and for example, may be a schematic structural diagram of a base station. The base station 1600 may be used in the system shown in FIG. 1, and performs functions of a target access network device or a source access network device in the foregoing method embodiments. As shown in the figure, the base station 1600 may include one or more radio units, for example, a remote radio unit (remote radio unit, RRU) 1610 and one or more baseband units (BBUs) (which may also be referred to as a distributed unit (DU)) 1620.

The RRU 1610 may be referred to as a transceiver unit, and corresponds to the transceiver unit 1410 in FIG. 9. Optionally, the RRU 1610 may also be referred to as a transceiver machine, a transceiver circuit, a transceiver, or the like, and may include at least one antenna 1611 and a radio unit 1612. Optionally, the RRU 1610 may include a receiving unit and a sending unit. The receiving unit may correspond to a receiver (or referred to as a receiver machine or a receiver circuit), and the sending unit may correspond to a transmitter (or referred to as a transmitter machine or a transmitter circuit). The RRU 1610 is mainly configured to receive and send a radio frequency signal and perform conversion between the radio frequency signal and a baseband signal, for example, configured to send a data packet to a terminal device. The BBU 1620 is mainly configured to perform baseband processing, control the base station, and so on. The RRU 1610 and the BBU 1620 may be physically disposed together, or may be physically disposed separately, in other words, in a distributed base station.

The BBU 1620 is a control center of the base station, may also be referred to as a processing unit, may correspond to the processing unit 1420 in FIG. 9, and is mainly configured to implement a baseband processing function, for example, channel coding, multiplexing, modulation, and spreading. For example, the BBU 1620 (the processing unit) may be configured to control the base station to perform an operation process related to the access network device in the foregoing method embodiments, for example, generate the foregoing first configuration parameter information.

In an example, the BBU 1620 may include one or more boards, and a plurality of boards may jointly support a radio access network (for example, an LTE network) of a single access standard, or may separately support radio access networks (for example, an LTE network, a 5G network, a 6G network, or another network) of different access standards. The BBU 1620 further includes a memory 1621 and a processor 1622. The memory 1621 is configured to store necessary instructions and data. The processor 1622 is configured to control the base station to perform a necessary action, for example, configured to control the base station to perform an operation procedure related to the network device in the foregoing method embodiments. The memory 1621 and the processor 1622 may serve the one or more boards. In other words, a memory and a processor may be disposed on each board. Alternatively, the plurality of boards may share a same memory and a same processor. In addition, a necessary circuit may be further disposed on each board.

It should be understood that the base station 1600 shown in FIG. 11 can implement the processes of the access network device in the method embodiment in FIG. 2. Operations and/or functions of the modules in the base station 1600 are respectively for implementing corresponding procedures in the foregoing method embodiments. For details, refer to the descriptions in the foregoing method embodiments. To avoid repetition, detailed descriptions are properly omitted herein.

The BBU 1620 may be configured to perform an action that is internally implemented by the access network device and that is described in the foregoing method embodiments, and the RRU 1610 may be configured to perform a sending action or a receiving action of the access network device that is described in the foregoing method embodiments, for example, an action of sending to or receiving from the terminal device. For details, refer to the descriptions in the foregoing method embodiments. The details are not described herein again.

An embodiment of this application further provides a processing apparatus, including a processor and an interface. The processor is configured to perform the communication method in any one of the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

In an implementation process, the steps in the foregoing methods may be implemented by using a hardware integrated logic circuit in the processor, or by using instructions in a form of software. The steps of the methods disclosed with reference to the embodiments of this application may be directly performed by a hardware processor, or may be performed by a combination of hardware in the processor and a software module. The software module may be in a storage medium that is mature in the art, such as a random access memory, a flash memory, a read-only memory, a programmable read-only memory, an electrically erasable programmable memory, or a register. The storage medium is located in the memory. The processor reads information in the memory and completes the steps of the foregoing methods in combination with the hardware thereof. To avoid repetition, details are not described herein again.

It should be noted that, the processor in the embodiments of this application may be an integrated circuit chip, and has a signal processing capability. In an implementation process, the steps in the foregoing method embodiments may be implemented by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component, and may implement or perform the methods, steps, and logic block diagrams that are disclosed in the embodiments of this application. The general-purpose processor may be a microprocessor, or the processor may be any conventional processor or the like. The steps of the methods disclosed with reference to the embodiments of this application may be directly performed and completed by using a hardware decoding processor, or may be performed and completed by using a combination of hardware in the decoding processor and a software module. The software module may be in a storage medium that is mature in the art, such as a random access memory, a flash memory, a read-only memory, a programmable read-only memory, an electrically erasable programmable memory, or a register. The storage medium is located in the memory. The processor reads information in the memory and completes the steps of the foregoing methods in combination with the hardware thereof.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories in the systems and methods described in this specification are intended to include but not limited to these memories and any memory of another appropriate type.

According to the methods provided in the embodiments of this application, this application further provides a computer program product. The computer program product includes: computer program code. When the computer program code is run on a computer, the computer is enabled to perform the method in the embodiment shown in FIG. 2 or any one of the foregoing embodiments.

According to the methods provided in the embodiments of this application, this application further provides a computer-readable storage medium. The computer-readable storage medium stores program code. When the program code is run on a computer, the computer is enabled to perform the method in the embodiment shown in FIG. 2 or any one of the foregoing embodiments.

The computer-readable storage medium may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

According to the methods provided in the embodiments of this application, this application further provides a communication system, including the foregoing terminal device and one or more of the access network devices.

Optionally, the communication system may further include another device that communicates with the terminal device and/or the access network device.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer instructions are loaded and executed on a computer, all or some of the procedures or functions according to the embodiments of this application are generated. The computer may be a general-purpose computer, a special-purpose computer, a computer network, or other programmable apparatuses. The computer instructions may be stored in a computer-readable storage medium or transmitted from one computer-readable storage medium to another computer-readable storage medium. For example, the computer instructions may be transmitted from one website, computer, server or data center to another website, computer, server or data center in a wired (for example, a coaxial cable, an optical fiber, or a digital subscriber line (digital subscriber line, DSL)) or wireless (for example, infrared, wireless, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disc, SSD)), or the like.

The terminal device and the access network device in the foregoing apparatus embodiments completely correspond to the terminal device and the access network device in the method embodiments. A corresponding module or unit performs a corresponding step. For example, a communication unit (the transceiver) performs a receiving step or a sending step in the method embodiments, and a step other than the sending step and the receiving step may be performed by the processing unit (the processor). For functions of specific units, refer to the corresponding method embodiments. There may be one or more processors.

Terminologies such as "component", "module", and "system" used in this specification indicate computer-related entities, hardware, firmware, combinations of hardware and software, software, or software being executed. For example, the component may be, but is not limited to, a process that runs on a processor, a processor, an object, an executable file, an execution thread, a program, and/or a computer. As illustrated in figures, both a computing device and an application that runs on the computing device may be components. One or more components may reside within a process and/or a thread of execution, and a component may be located on one computer and/or distributed on two or more computers. In addition, these components may be executed in various computer-readable media storing various data structures. The components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in the embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the division into units is merely a logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate components may or may not be physically separated, and the components displayed as units may or may not be physical units, in other words, may be located in one place or may be distributed on a plurality of network units. Some or all of the units may be selected based on actual requirements to achieve the objectives of the solutions of the embodiments.

In addition, the functional units in the embodiments of this application may be integrated into one processing unit, each of the units may be physically separated, or two or more units may be integrated into one unit.

When the functions are implemented in a form of a software functional unit and sold or used as an independent product, the functions may be stored in a computer-readable storage medium. Based on such an understanding, the technical solutions of this application essentially, the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory ROM, a random access memory RAM, a magnetic disk, or an optical disc.

It should be understood that sequence numbers of the processes do not mean execution sequences in various embodiments of this application. The execution sequences of the processes should be determined according to functions and internal logic of the processes, and should not be construed as any limitation on implementation processes of the embodiments of this application.

In addition, the terms "system" and "network" in this specification may be used interchangeably in this specification. The term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between associated objects. For example, A/B may represent A or B.

The terms (or numbers) such as "first" and "second" in the embodiments of this application are used merely for the purpose of description, in other words, are merely intended to distinguish between different objects such as different "PDUs", and shall not be construed as indicating or implying relative importance or implying a quantity of indicated technical features. Therefore, a feature defined by "first", "second", or the like may explicitly or implicitly include one or more features. In the descriptions of the embodiments of this application, "at least one" means one or more, and "a plurality of" means two or more. "At least one of the following items" or a similar expression thereof refers to any combination of these items, including one item or any combination of a plurality of items.

For example, unless otherwise specified, a meaning of an expression similar to "an item includes at least one of the following: A, B, and C" in the embodiments of this application usually means that the item may be any one of the following: A; B; C; A and B; A and C; B and C; A, B, and C; A and A; A, A, and A; A, A, and B; A, A and C; A, B and B; A, C, and C; B and B; B, B and B; B, B and C; C and C; C, C, and C; and other combinations of A, B, and C. In the foregoing descriptions, a total of three elements A, B, and C are used as an example to describe an optional case of the item. When an expression is "an item includes at least one of the following: A, B, ..., and X", in other words, more elements are included in the expression, a case to which the item is applicable may also be obtained according to the foregoing rule.

## Claims

1. A communication method, wherein the method is applied to a terminal device, and the method comprises:
receiving (S210) first configuration parameter information, wherein the first configuration parameter information is used for determining a first rule, the first rule is a rule for mapping a first data flow to a data radio bearer DRB, and the first data flow is a protocol data unit PDU set, a PDU, a sub quality of service QoS flow, a data flow at a finer granularity than a QoS flow, a data flow comprised in a QoS flow, a data flow mapped to a QoS flow, or a data flow mapped to a sub QoS flow; and
mapping (S220) to-be-transmitted data to the DRB according to the first rule;
wherein the first configuration parameter information comprises a list of PDU set identifiers and a priority list of PDUs in a PDU set, the list of PDU set identifiers comprises an identifier of a third PDU set and an identifier of a fourth PDU set, and the priority list of the PDUs in the PDU set comprises a first priority index and a second priority index, wherein the first priority index identifies a PDU with a first priority in the PDU set, and the second priority index identifies a PDU with a second priority in the PDU set; and
the mapping (S210) to-be-transmitted data to the DRB according to the first rule comprises:
mapping a PDU with the first priority in the third PDU set and a PDU with the first priority in the fourth PDU set in one or more QoS flows to a first DRB according to the identifier of the third PDU set, the identifier of the fourth PDU set, and the priority list of the PDUs in the PDU set; and
mapping a PDU with the second priority in the third PDU set and a PDU with the second priority in the fourth PDU set in the one or more QoS flows to a second DRB according to the identifier of the third PDU set, the identifier of the fourth PDU set, and the priority list of the PDUs in the PDU set, wherein
a priority index of a PDU set of the to-be-transmitted data is the first priority index or the second priority index.

2. The method according to claim 1, wherein the first configuration parameter information comprises one or more of the following information: a priority identifier of a PDU set, a dependency identifier of a PDU set, an identifier of a PDU in a PDU set, an index parameter, a sub QoS flow parameter, a data packet size of a PDU set, and a delay of a PDU set, wherein the index parameter represents a PDU index in a QoS flow.

3. The method according to claim 1 or 2, wherein the first configuration parameter information is represented by one or more fields; and the method further comprises:
determining one or more of the following: a value range of the one or more fields, a data structure of the one or more fields, a quantity of values of the one or more fields, and a need code of the one or more fields.

4. The method according to claim 3, wherein a type of the one or more fields is a one-shot operation field, wherein the one-shot operation field indicates that the terminal device does not store the first configuration parameter information after receiving the first configuration parameter information.

5. The method according to claim 3, wherein a type of the one or more fields is a first-type storage field, wherein the first-type storage field indicates that the terminal device stores the first configuration parameter information in the terminal device after receiving the first configuration parameter information.

6. The method according to any one of claims 3 to 5, wherein a type of the data structure corresponding to the one or more fields is a sequence structure or an integer structure.

7. The method according to any one of claims 3 to 6, wherein the first configuration parameter information is represented by a plurality of fields, the plurality of fields comprise a first field, and the first field represents a QoS flow identifier QFI or a QFI list.

8. The method according to any one of claims 1 to 7, wherein the list of PDU set identifiers comprises an identifier of a first PDU set and an identifier of a second PDU set; and
the mapping to-be-transmitted data to the data radio bearer DRB according to the first rule comprises:
mapping a first PDU set and a second PDU set of each QoS flow in a QoS flow list to the DRB according to the identifier of the first PDU set and the identifier of the second PDU set, wherein the QoS flow list comprises one or more QoS flow identifiers, wherein
a PDU set of the to-be-transmitted data is the first PDU set or the second PDU set.

9. The method according to any one of claims 1 to 7, wherein the first configuration parameter information comprises a first sub QoS flow parameter, a second sub QoS flow parameter, a first QFI, and a second QFI, the first QFI identifies a first QoS flow, the second QFI identifies a second QoS flow, the first sub QoS flow parameter identifies a first sub QoS flow in a QoS flow, the second sub QoS flow parameter identifies a second sub QoS flow in a QoS flow, the first QoS flow comprises one or more sub QoS flows, and the second QoS flow comprises one or more sub QoS flows; and
the mapping to-be-transmitted data to the DRB according to the first rule comprises:
mapping a first sub QoS flow and a second sub QoS flow in the first QoS flow and a first sub QoS flow and a second sub QoS flow in the second QoS flow to a first DRB according to the first sub QoS flow parameter, the second sub QoS flow parameter, the first QFI, and the second QFI, wherein
a sub QoS flow of the to-be-transmitted data is the first sub QoS flow or the second sub QoS flow.

10. A communication method, wherein the method is applied to an access network device, and the method comprises:
determining first configuration parameter information, wherein the first configuration parameter information comprises a list of PDU set identifiers and a priority list of PDUs in a PDU set, the list of PDU set identifiers comprises an identifier of a third PDU set and an identifier of a fourth PDU set, and the priority list of the PDUs in the PDU set comprises a first priority index and a second priority index, wherein the first priority index identifies a PDU with a first priority in the PDU set, and the second priority index identifies a PDU with a second priority in the PDU set; and
sending (S210) the first configuration parameter information to a terminal device.

11. The method according to claim 10, wherein the method further comprises:
releasing the first configuration parameter information, wherein the releasing the first configuration parameter information is implemented by not configuring the first configuration parameter information.

12. The method according to claim 10 or 11, wherein the determining first configuration parameter information comprises:
determining the first configuration parameter information according to a policy and charging control PCC rule delivered by a core network device.

13. The method according to any one of claims 10 to 12, wherein the sending the first configuration parameter information to a terminal device comprises:
sending radio resource control RRC signaling to the terminal device, wherein the RRC signaling comprises the first configuration parameter information.

14. The method according to claim 13, wherein the first configuration parameter information is comprised in a service data adaptation protocol SDAP configuration in the RRC signaling, or the first configuration parameter information is comprised in a data radio bearer DRB configuration in the RRC signaling.

15. A communication apparatus, comprising:
a processor, configured to execute computer instructions stored in a memory, to enable the apparatus to perform the method according to any one of claims 1 to 9, or enable the apparatus to perform the method according to any one of claims 10 to 14.

## Patentansprüche

1. Kommunikationsverfahren, wobei das Verfahren auf ein Endgerät angewendet wird und das Verfahren umfasst:
Empfangen (S210) von ersten Konfigurationsparameterinformationen, wobei die ersten Konfigurationsparameterinformationen zum Bestimmen einer ersten Regel verwendet werden, wobei die erste Regel eine Regel zum Abbilden eines ersten Datenflusses auf einen Data Radio Bearer (DRB) ist, und der erste Datenfluss eine Protokolldateneinheit-Menge (PDU-Menge), eine PDU, ein Teil-Quality-of-Service (QoS)-Fluss, ein Datenfluss mit einer feineren Granularität als ein QoS-Fluss, ein in einem QoS-Fluss enthaltener Datenfluss, ein auf einen QoS-Fluss abgebildeter Datenfluss oder ein auf einen Teil-QoS-Fluss abgebildeter Datenfluss ist; und
Abbilden (S220) der zu übertragenden Daten auf den DRB gemäß der ersten Regel;
wobei die ersten Konfigurationsparameterinformationen eine Liste von PDU-Mengen-Identifikatoren und eine Prioritätsliste von PDUs in einer PDU-Menge umfassen, die Liste der PDU-Mengen-Identifikatoren einen Identifikator einer dritten PDU-Menge und einen Identifikator einer vierten PDU-Menge umfasst, und die Prioritätsliste der PDUs in der PDU-Menge einen ersten Prioritätsindex und einen zweiten Prioritätsindex umfasst, wobei der erste Prioritätsindex eine PDU mit einer ersten Priorität in der PDU-Menge identifiziert und der zweite Prioritätsindex eine PDU mit einer zweiten Priorität in der PDU-Menge identifiziert; und
das Abbilden (S210) der zu übertragenden Daten auf den DRB gemäß der ersten Regel umfasst:
Abbilden einer PDU mit der ersten Priorität in der dritten PDU-Menge und einer PDU mit der ersten Priorität in der vierten PDU-Menge in einem oder mehreren QoS-Flüssen auf einen ersten DRB gemäß dem Identifikator der dritten PDU-Menge, dem Identifikator der vierten PDU-Menge und der Prioritätsliste der PDUs in der PDU-Menge; und
Abbilden einer PDU mit der zweiten Priorität in der dritten PDU-Menge und einer PDU mit der zweiten Priorität in der vierten PDU-Menge in den einen oder mehreren QoS-Flüssen auf einen zweiten DRB gemäß dem Identifikator der dritten PDU-Menge, dem Identifikator der vierten PDU-Menge und der Prioritätsliste der PDUs in der PDU-Menge, wobei
ein Prioritätsindex einer PDU-Menge der zu übertragenden Daten der erste Prioritätsindex oder der zweite Prioritätsindex ist.

2. Verfahren nach Anspruch 1, wobei die ersten Konfigurationsparameterinformationen eine oder mehrere der folgenden Informationen umfassen: einen Prioritätsidentifikator einer PDU-Menge, einen Abhängigkeitsidentifikator einer PDU-Menge, einen Identifikator einer PDU in einer PDU-Menge, einen Indexparameter, einen Teil-QoS-Flussparameter, eine Datenpaketgröße einer PDU-Menge und eine Verzögerung einer PDU-Menge, wobei der Indexparameter einen PDU-Index in einem QoS-Fluss darstellt.

3. Verfahren nach Anspruch 1 oder 2, wobei die ersten Konfigurationsparameterinformationen durch ein oder mehrere Felder dargestellt werden; und das Verfahren ferner umfasst:
Bestimmung eines oder mehrerer der folgenden Elemente: ein Wertebereich des einen oder der mehreren Felder, eine Datenstruktur des einen oder der mehreren Felder, eine Anzahl von Werten des einen oder der mehreren Felder und ein Bedarfscode des einen oder der mehreren Felder.

4. Verfahren nach Anspruch 3, wobei ein Typ des einen oder der mehreren Felder ein One-Shot-Operationsfeld ist, wobei das One-Shot-Operationsfeld angibt, dass das Endgerät die ersten Konfigurationsparameterinformationen nach dem Empfangen der ersten Konfigurationsparameterinformationen nicht speichert.

5. Verfahren nach Anspruch 3, wobei ein Typ des einen oder der mehreren Felder ein Speichertypfeld erster Art ist, wobei das Speichertypfeld erster Art angibt, dass das Endgerät die ersten Konfigurationsparameterinformationen im Endgerät speichert, nachdem es die ersten Konfigurationsparameterinformationen empfangen hat.

6. Verfahren nach einem der Ansprüche 3 bis 5, wobei ein Typ der Datenstruktur, die dem einen oder den mehreren Feldern entspricht, eine Sequenzstruktur oder eine Integer-Struktur ist.

7. Verfahren nach einem der Ansprüche 3 bis 6, wobei die ersten Konfigurationsparameterinformationen durch eine Mehrzahl von Feldern dargestellt werden, wobei die Mehrzahl von Feldern ein erstes Feld umfasst und das erste Feld eine QoS-Fluss-Kennung QFI oder eine QFI-Liste darstellt.

8. Verfahren nach einem der Ansprüche 1 bis 7, wobei die Liste der PDU-Mengen-Kennungen eine Kennung einer ersten PDU-Menge und eine Kennung einer zweiten PDU-Menge umfasst; und
das Abbilden von zu übertragenden Daten auf den Datenfunkträger DRB gemäß der ersten Regel umfasst:
Abbilden einer ersten PDU-Menge und einer zweiten PDU-Menge jedes QoS-Flusses in einer QoS-Fluss-Liste auf den DRB gemäß der Kennung der ersten PDU-Menge und der Kennung der zweiten PDU-Menge, wobei die QoS-Fluss-Liste eine oder mehrere QoS-Fluss-Kennungen umfasst, wobei
eine PDU-Menge der zu übertragenden Daten die erste PDU-Menge oder die zweite PDU-Menge ist.

9. Verfahren nach einem der Ansprüche 1 bis 7, wobei die ersten Konfigurationsparameterinformationen einen ersten Teil-QoS-Flussparameter, einen zweiten Teil-QoS-Flussparameter, eine erste QFI und eine zweite QFI umfassen, wobei die erste QFI einen ersten QoS-Fluss identifiziert, die zweite QFI einen zweiten QoS-Fluss identifiziert, der erste Teil-QoS-Flussparameter einen ersten Teil-QoS-Fluss in einem QoS-Fluss identifiziert, der zweite Teil-QoS-Flussparameter einen zweiten Teil-QoS-Fluss in einem QoS-Fluss identifiziert, der erste QoS-Fluss einen oder mehrere Teil-QoS-Flüsse umfasst und der zweite QoS-Fluss einen oder mehrere Teil-QoS-Flüsse umfasst; und
das Abbilden von zu übertragenden Daten auf den DRB gemäß der ersten Regel umfasst:
Abbilden eines ersten Teil-QoS-Flusses und eines zweiten Teil-QoS-Flusses im ersten QoS-Fluss sowie eines ersten Teil-QoS-Flusses und eines zweiten Teil-QoS-Flusses im zweiten QoS-Fluss auf einen ersten DRB gemäß dem Parameter des ersten Teil-QoS-Flusses, dem Parameter des zweiten Teil-QoS-Flusses, dem ersten QFI und dem zweiten QFI, wobei
ein Teil-QoS-Fluss der zu übertragenden Daten der erste Teil-QoS-Fluss oder der zweite Teil-QoS-Fluss ist.

10. Kommunikationsverfahren, wobei das Verfahren auf eine Zugangsnetzwerkeinrichtung angewendet wird und das Verfahren umfasst:
Bestimmen erster Konfigurationsparameterinformationen, wobei die ersten Konfigurationsparameterinformationen eine Liste von PDU-Mengen-Kennungen und eine Prioritätsliste von PDUs in einer PDU-Menge umfassen, die Liste der PDU-Mengen-Kennungen eine Kennung einer dritten PDU-Menge und eine Kennung einer vierten PDU-Menge umfasst und die Prioritätsliste der PDUs in der PDU-Menge einen ersten Prioritätsindex und einen zweiten Prioritätsindex umfasst, wobei der erste Prioritätsindex eine PDU mit einer ersten Priorität in der PDU-Menge identifiziert und der zweite Prioritätsindex eine PDU mit einer zweiten Priorität in der PDU-Menge identifiziert; und
Senden (S210) der ersten Konfigurationsparameterinformationen an ein Endgerät.

11. Verfahren nach Anspruch 10, wobei das Verfahren ferner umfasst:
Freigeben der ersten Konfigurationsparameterinformationen, wobei das Freigeben der ersten Konfigurationsparameterinformationen durch Nicht-Konfigurieren der ersten Konfigurationsparameterinformationen implementiert wird.

12. Verfahren nach Anspruch 10 oder 11, wobei das Bestimmen der ersten Konfigurationsparameterinformationen umfasst:
Bestimmen der ersten Konfigurationsparameterinformationen gemäß einer PCC-Regel (Policy and Charging Control), die von einer Kernnetzwerkeinrichtung bereitgestellt wird.

13. Verfahren nach einem der Ansprüche 10 bis 12, wobei das Senden der ersten Konfigurationsparameterinformationen an ein Endgerät umfasst:
Senden einer RRC-Signalisierung (Radio Resource Control) an das Endgerät, wobei die RRC-Signalisierung die ersten Konfigurationsparameterinformationen umfasst.

14. Verfahren nach Anspruch 13, wobei die ersten Konfigurationsparameterinformationen in einer SDAP-Konfiguration (Service Data Adaptation Protocol) in der RRC-Signalisierung enthalten sind, oder die ersten Konfigurationsparameterinformationen in einer DRB-Konfiguration (Data Radio Bearer) in der RRC-Signalisierung enthalten sind.

15. Kommunikationsvorrichtung, umfassend:
einen Prozessor, der konfiguriert ist, in einem Speicher gespeicherte Computeranweisungen auszuführen, um die Vorrichtung in die Lage zu versetzen, das Verfahren nach einem der Ansprüche 1 bis 9 durchzuführen, oder um die Vorrichtung in die Lage zu versetzen, das Verfahren nach einem der Ansprüche 10 bis 14 durchzuführen.

## Revendications

1. Procédé de communication, dans lequel le procédé est appliqué à un dispositif terminal, et le procédé comprend :
la réception (S210) de premières informations de paramètre de configuration, dans lequel les premières informations de paramètre de configuration sont utilisées pour déterminer une première règle, la première règle est une règle pour mapper un premier flux de données vers un support de transmission de données radio (DRB), et le premier flux de données est un ensemble d'unités de données de protocole (PDU), une PDU, un sous-flux de qualité de service (QoS), un flux de données à une granularité plus fine qu'un flux QoS, un flux de données compris dans un flux QoS, un flux de données mappé vers un flux QoS, ou un flux de données mappé vers un sous-flux QoS ; et
le mappage (S220) des données à transmettre vers le DRB selon la première règle ;
dans lequel les premières informations de paramètre de configuration comprennent une liste d'identifiants d'ensembles de PDU et une liste de priorité des PDU dans un ensemble de PDU, la liste d'identifiants d'ensembles de PDU comprend un identifiant d'un troisième ensemble de PDU et un identifiant d'un quatrième ensemble de PDU, et la liste de priorité des PDU dans l'ensemble de PDU comprend un premier indice de priorité et un second indice de priorité, dans lequel le premier indice de priorité identifie une PDU avec une première priorité dans l'ensemble de PDU, et le second indice de priorité identifie une PDU avec une seconde priorité dans l'ensemble de PDU ; et
le mappage (S210) des données à transmettre vers le DRB selon la première règle comprend :
le mappage d'une PDU avec la première priorité dans le troisième ensemble de PDU et d'une PDU avec la première priorité dans le quatrième ensemble de PDU dans un ou plusieurs flux QoS vers un premier DRB selon l'identifiant du troisième ensemble de PDU, l'identifiant du quatrième ensemble de PDU, et la liste de priorité des PDU dans l'ensemble de PDU ; et
le mappage d'une PDU avec la seconde priorité dans le troisième ensemble de PDU et d'une PDU avec la seconde priorité dans le quatrième ensemble de PDU dans les un ou plusieurs flux QoS vers un second DRB selon l'identifiant du troisième ensemble de PDU, l'identifiant du quatrième ensemble de PDU, et la liste de priorité des PDU dans l'ensemble de PDU, dans lequel
un indice de priorité d'un ensemble de PDU des données à transmettre est le premier indice de priorité ou le second indice de priorité.

2. Procédé selon la revendication 1, dans lequel les premières informations de paramètre de configuration comprennent une ou plusieurs des informations suivantes : un identifiant de priorité d'un ensemble de PDU, un identifiant de dépendance d'un ensemble de PDU, un identifiant d'une PDU dans un ensemble de PDU, un paramètre d'indice, un paramètre de sous-flux QoS, une taille de paquet de données d'un ensemble de PDU, et un retard d'un ensemble de PDU, dans lequel le paramètre d'indice représente un indice de PDU dans un flux QoS.

3. Procédé selon la revendication 1 ou 2, dans lequel les premières informations de paramètre de configuration sont représentées par un ou plusieurs champs ; et le procédé comprend en outre :
la détermination de l'un ou de plusieurs des éléments suivants : une plage de valeurs du ou des champs, une structure de données du ou des champs, une quantité de valeurs du ou des champs, et un code de besoin du ou des champs.

4. Procédé selon la revendication 3, dans lequel un type du ou des champs est un champ d'opération unique (one-shot), dans lequel le champ d'opération unique indique que le dispositif terminal ne stocke pas les premières informations de paramètre de configuration après avoir reçu les premières informations de paramètre de configuration.

5. Procédé selon la revendication 3, dans lequel un type du ou des champs est un champ de stockage de premier type, dans lequel le champ de stockage de premier type indique que le dispositif terminal stocke les premières informations de paramètre de configuration dans le dispositif terminal après avoir reçu les premières informations de paramètre de configuration.

6. Procédé selon l'une quelconque des revendications 3 à 5, dans lequel un type de la structure de données correspondant au ou aux champs est une structure de séquence ou une structure entière.

7. Procédé selon l'une quelconque des revendications 3 à 6, dans lequel les premières informations de paramètre de configuration sont représentées par une pluralité de champs, la pluralité de champs comprend un premier champ, et le premier champ représente un identifiant de flux QoS (QFI) ou une liste de QFI.

8. Procédé selon l'une quelconque des revendications 1 à 7, dans lequel la liste d'identifiants d'ensemble de PDU comprend un identifiant d'un premier ensemble de PDU et un identifiant d'un second ensemble de PDU ; et
le mappage des données à transmettre vers le support radio de données (DRB) selon la première règle comprend :
le mappage d'un premier ensemble de PDU et d'un second ensemble de PDU de chaque flux QoS dans une liste de flux QoS vers le DRB selon l'identifiant du premier ensemble de PDU et l'identifiant du second ensemble de PDU, dans lequel la liste de flux QoS comprend un ou plusieurs identifiants de flux QoS, dans lequel
un ensemble de PDU des données à transmettre est le premier ensemble de PDU ou le second ensemble de PDU.

9. Procédé selon l'une quelconque des revendications 1 à 7, dans lequel les premières informations de paramètre de configuration comprennent un premier paramètre de sous-flux QoS, un second paramètre de sous-flux QoS, un premier QFI, et un second QFI, le premier QFI identifie un premier flux QoS, le second QFI identifie un second flux QoS, le premier paramètre de sous-flux QoS identifie un premier sous-flux QoS dans un flux QoS, le second paramètre de sous-flux QoS identifie un second sous-flux QoS dans un flux QoS, le premier flux QoS comprend un ou plusieurs sous-flux QoS, et le second flux QoS comprend un ou plusieurs sous-flux QoS ; et
le mappage des données à transmettre vers le DRB selon la première règle comprend :
le mappage d'un premier sous-flux QoS et d'un second sous-flux QoS dans le premier flux QoS et d'un premier sous-flux QoS et d'un second sous-flux QoS dans le second flux QoS vers un premier DRB selon le premier paramètre de sous-flux QoS, le second paramètre de sous-flux QoS, le premier QFI et le second QFI, dans lequel
un sous-flux QoS des données à transmettre est le premier sous-flux QoS ou le second sous-flux QoS.

10. Procédé de communication, dans lequel le procédé est appliqué à un dispositif de réseau d'accès, et le procédé comprend :
la détermination de premières informations de paramètre de configuration, dans lequel les premières informations de paramètre de configuration comprennent une liste d'identifiants d'ensemble de PDU et une liste de priorité de PDU dans un ensemble de PDU, la liste d'identifiants d'ensemble de PDU comprend un identifiant d'un troisième ensemble de PDU et un identifiant d'un quatrième ensemble de PDU, et la liste de priorité des PDU dans l'ensemble de PDU comprend un premier indice de priorité et un second indice de priorité, dans lequel le premier indice de priorité identifie un PDU avec une première priorité dans l'ensemble de PDU, et le second indice de priorité identifie un PDU avec une seconde priorité dans l'ensemble de PDU ; et
l'envoi (S210) des premières informations de paramètre de configuration à un dispositif terminal.

11. Procédé selon la revendication 10, dans lequel le procédé comprend en outre :
la libération des premières informations de paramètre de configuration, dans lequel la libération des premières informations de paramètre de configuration est mise en œuvre par la non-configuration des premières informations de paramètre de configuration.

12. Procédé selon la revendication 10 ou 11, dans lequel la détermination des premières informations de paramètre de configuration comprend :
la détermination des premières informations de paramètre de configuration selon une règle de contrôle de politique et de facturation PCC délivrée par un dispositif de réseau cœur.

13. Procédé selon l'une quelconque des revendications 10 à 12, dans lequel l'envoi des premières informations de paramètre de configuration à un dispositif terminal comprend :
l'envoi d'une signalisation de contrôle de ressources radio RRC au dispositif terminal, dans lequel la signalisation RRC comprend les premières informations de paramètre de configuration.

14. Procédé selon la revendication 13, dans lequel les premières informations de paramètre de configuration sont comprises dans une configuration de protocole d'adaptation de données de service SDAP dans la signalisation RRC, ou les premières informations de paramètre de configuration sont comprises dans une configuration de porteuse de données radio DRB dans la signalisation RRC.

15. Appareil de communication, comprenant :
un processeur, configuré pour exécuter des instructions informatiques stockées dans une mémoire, pour permettre à l'appareil d'exécuter le procédé selon l'une quelconque des revendications 1 à 9, ou permettre à l'appareil d'exécuter le procédé selon l'une quelconque des revendications 10 à 14.
